(19) Europäisches Patentamt
European Patent Office
Office européen des brevets

(11) **EP 2 133 603 B1**

(12) **EUROPEAN PATENT SPECIFICATION**

(45) Date of publication and mention
of the grant of the patent:
**03.08.2011   Bulletin 2011/31**

(51) Int Cl.:
*F16H 63/42* *(2006.01)*       *F16H 61/04* *(2006.01)*

(21) Application number: **09251510.5**

(22) Date of filing: **08.06.2009**

(54) **Control apparatus and control method for manual transmission-mounted vehicle**

Steuervorrichtung und Steuerverfahren für ein Fahrzeug mit manuellem Schaltgetriebe

Appareil et procédé de contrôle pour véhicule à transmission manuelle

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **09.06.2008   JP 2008151120
18.09.2008   JP 2008239473**

(43) Date of publication of application:
**16.12.2009   Bulletin 2009/51**

(73) Proprietor: **Toyota Jidosha Kabushiki Kaisha
Toyota-shi, Aichi-ken 471-8571 (JP)**

(72) Inventor: **Ohkubo, Tadanao
c/o Toyota Jidosha Kabushiki Kaisha
Toyota-shi,
Aichi-ken, 471-8571 (JP)**

(74) Representative: **Albutt, Anthony John
D Young & Co LLP
120 Holborn
London EC1N 2DY (GB)**

(56) References cited:
**EP-A- 1 887 262          WO-A-98/27369
JP-A- 2007 225 096        US-A- 4 320 381
US-A1- 2007 207 896**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 2 133 603 B1**

**Description**

BACKGROUND OF THE INVENTION

1. Field of the Invention

The invention relates to a control apparatus and a control method for a manual transmission-mounted vehicle equipped with a manual transmission whose shift stage is changed over through a shift operation of a shift lever, and a shift command device that commands a driver to perform the shift operation of the shift lever. In particular, the invention relates to an art for restraining the shift command device from issuing an erroneous command during a double clutch operation.

2. Description of the Related Art

There is known a control apparatus for a manual transmission-mounted vehicle equipped with a manual transmission whose shift stage is changed over through a shift operation by a shift lever during an operation of a clutch pedal, and a shift command device that calculates a target gear stage from a relationship stored in advance on the basis of a state of a vehicle, makes a determination on an actual gear stage on the basis of a rotational speed of an input shaft of the manual transmission and a rotational speed of an output shaft of the manual transmission, and commands a driver to perform the shift operation of the shift lever to the target gear stage side when the target gear stage does not coincide with the actual gear stage. For example, such a control apparatus is described in Japanese Patent Application Publication No. 2007-225096 (JP-A-2007-225096).

The shift command device described in the aforementioned Japanese Patent Application Publication No. 2007-225096 (JP-A-2007-225096) commands a driver to perform a shift operation according to a preset relationship between vehicle speed and accelerator operation amount, namely, a so-called shift diagram. In general, this shift diagram is set such that the vehicle can be driven with good fuel consumption while bringing out the performance of the vehicle sufficiently. Thus, according to the shift command device, the driver performs the shift operation of the shift lever according to the command of the shift command device, and can thereby drive the vehicle with good fuel consumption while bringing out the performance of the vehicle sufficiently.

In a vehicle mounted with a manual transmission, when making a shift, a so-called double clutch operation may be performed. That is, a shift lever is operated to a neutral position when a clutch pedal is depressed for the first time. At the neutral position, the clutch pedal is returned to engage a clutch. In this state, an incitement operation of an accelerator pedal is performed to appropriately raise an engine rotational speed. After that, the clutch pedal is depressed again and the shift lever is operated to a shift position corresponding to a desired shift stage. The clutch pedal is then returned again to engage the clutch and hence complete the shift. By performing this double clutch operation, a rotational speed of an input shaft of the manual transmission and a rotational speed of an output shaft of the manual transmission are already substantially synchronized with each other when a changeover to the shift position corresponding to the desired shift stage is made, and the engine rotational speed and the rotational speed of the input shaft of the manual transmission are already substantially synchronized with each other when the clutch is engaged at the shift position corresponding to the desired shift stage. Thus, a shift shock caused during running can be suppressed while alleviating the load of a synchronization device such as a synchronization mechanism or the like.

However, in the shift command device according to the related art, there is a problem in that an erroneous command to perform the shift operation is issued as a result of the double clutch operation. That is, in the course of the shift, an accelerator operation amount is instantaneously fluctuated with respect to a predetermined vehicle speed through the so-called incitement operation of raising the engine rotational speed with the clutch engaged at the neutral position. Therefore, a command causing a feeling of incongruity may be issued in the case where the shift command device is designed to make a determination on an actual gear stage on the basis of a rotational speed of the input shaft of the manual transmission and a rotational speed of the output shaft of the manual transmission.

United States Patent 4,320,381 discloses a gear ratio indicator for use in combination with "crash type" non-synchronous gear boxes. The indicator calculates the actual ratio of transmission input shaft speed to output shaft speed and compares this determined ratio to the various available gear ratios within the transmission.

United States Patent Application No. 11/368,749 (US-A1-2007/0207896), which shows all the features of the preamble according to claims 1 and 10, discloses a method of automatically matching engine speed to vehicle speed while a manual transmission is shifted.

International Patent Application No. PCT/US97/23623 (WO-A-98/27369) discloses a gear availability indicator for multigear transmissions of motor vehicles.

SUMMARY OF THE INVENTION

The present invention is defined in claims 1 and 10, provides a control apparatus and a control method for a manual transmission-mounted vehicle that restrain a shift command device from issuing an erroneous command regarding a double clutch operation.

(1) In a first aspect of the invention, a control apparatus for a manual transmission-mounted vehicle is equipped with a manual transmission whose shift stage is changed over through a shift operation by a shift lever during an operation of a clutch pedal, and a shift command device that commands a driver to perform a shift operation of the shift lever. This control apparatus includes (2) double clutch operation determination means for making a determination on a double clutch operation by the driver, wherein a double clutch operation is defined as the process of depressing the clutch pedal to operate a shift lever to neutral, releasing the clutch pedal to reengage the clutch, increasing the engine rotational speed by inciting the accelerator, depressing the clutch pedal again and operating the shift lever to a shift position corresponding to the desired shift stage, releasing the clutch pedal again to engage the clutch and to complete a shift, and (3) shift command stop means for temporarily stopping the shift command device from outputting a command when the double clutch operation determination means determines that the double clutch operation has been performed.

The control apparatus for the manual transmission-mounted vehicle according to the first aspect of the invention is equipped with the manual transmission whose shift stage is changed over through the shift operation by the shift lever during the operation of the clutch pedal, and the shift command device that commands the driver to perform the shift operation of the shift lever. This control apparatus further includes the double clutch operation determination means for making the determination on the double clutch operation by the driver, and the shift command stop means for temporarily stopping the shift command device from outputting the command when the double clutch operation determination means determines that the double clutch operation has been performed. Therefore, the shift command device can be restrained from issuing an erroneous command regarding the double clutch operation.

Further, in the first aspect of the invention, the shift command device may calculate an actual gear stage on a basis of a rotational speed of an input shaft of the manual transmission and a rotational speed of an output shaft of the manual transmission, calculate a required gear stage on a basis of a vehicle speed and an accelerator operation amount, and indicate a command to perform a shift operation for making the actual gear stage coincident with the required gear stage.

According to the control apparatus for the manual transmission-mounted vehicle according to the first aspect of the invention, the shift command device calculates the actual gear stage on the basis of the rotational speed of the input shaft of the manual transmission and the rotational speed of the output shaft of the manual transmission, calculates the required gear stage on the basis of the vehicle speed and the accelerator operation amount, and indicates the command to perform the shift operation for making the actual gear stage coincident with the required gear stage. Therefore, an erroneous command to perform the shift operation for making the actual gear stage coincident with the required gear stage as to the double clutch operation can be restrained from being issued.

Further, in the first aspect of the invention, the double clutch operation determination means may determine, on a basis of performance of an incitement operation of an accelerator pedal immediately after an operation of depressing and returning the clutch pedal, that the double clutch operation has been performed.

According to the control apparatus for the manual transmission-mounted vehicle according to the first aspect of the invention, the double clutch operation determination means determines, on the basis of the performance of the incitement operation of the accelerator pedal immediately after the operation of depressing and returning the clutch pedal, that the double clutch operation has been performed. Therefore, in the course of a shift, the shift command device can be restrained from issuing a command causing a feeling of incongruity as a result of instantaneous fluctuation of the accelerator operation amount with respect to a predetermined vehicle speed in response to the so-called incitement operation of raising the engine rotational speed with the clutch engaged at the neutral position.

Further, in the first aspect of the invention, the double clutch operation determination means may determine, on a basis of performance of an incitement operation of an accelerator pedal before a lapse of a preset criterial time after an operation of depressing and returning the clutch pedal, that the double clutch operation has been performed, and make a learning correction to reduce the criterial time when a time to a time point at which it is determined that the double clutch operation has been performed is shorter than the criterial time.

According to the control apparatus for the manual transmission-mounted vehicle according to the first aspect of the invention, the double clutch operation determination means determines, on the basis of the performance of the incitement operation of the accelerator pedal before the lapse of the preset criterial time after the operation of depressing and returning the clutch pedal, that the double clutch operation has been performed, and makes the learning correction to reduce the criterial time when the time to the time point at which it is determined that the double clutch operation has been performed is shorter than the criterial time. Therefore, the criterial time is prevented from being set unnecessarily long. Thus, the time in which the shift operation command is stopped can be reduced while restraining the shift command device from issuing an erroneous command as a result of the incitement operation during the double clutch operation.

Especially, the shift operation command can be restrained from being stopped due to the determination that the double clutch operation has been performed, through the incitement operation during a normal operation.

Further, in the first aspect of the invention, the double clutch operation determination means may determine, on a basis of performance of an incitement operation of an accelerator pedal before a lapse of a preset criterial time after an operation of depressing and returning the clutch pedal, that the double clutch operation has been performed, and make a learning correction such that the criterial time decreases as a number of times of a determination that the double clutch operation has been performed within a predetermined time decreases.

According to the control apparatus for the manual transmission-mounted vehicle according to the first aspect of the invention, the double clutch operation determination means determines, on the basis of the performance of the incitement operation of the accelerator pedal before the lapse of the preset criterial time after the operation of depressing and returning the clutch pedal, that the double clutch operation has been performed, and makes the learning correction such that the criterial time decreases as the number of times of the determination that the double clutch operation has been performed within the predetermined time decreases. Therefore, the criterial time is prevented from being set unnecessarily long. Thus, the time in which the shift operation command is stopped can be reduced while restraining the shift command device from issuing an erroneous command as a result of the incitement operation during the double clutch operation.

Further, the control apparatus for the manual transmission-mounted vehicle according to the first aspect of the invention may be equipped with criterial time initialization means for returning the criterial time to a preset initial value when a main switch of the vehicle is operated to be turned on or off.

The control apparatus for the manual transmission-mounted vehicle according to the first aspect of the invention is equipped with the criterial time initialization means for returning the criterial time to the preset initial value when the main switch of the vehicle is operated to be turned on or off. Therefore, the criterial time is prevented from being set unnecessarily long by being set again in accordance with a character of the driver, a running condition, an environment, or the like. Thus, the time in which the shift operation command is stopped can be reduced while restraining the shift command device from issuing an erroneous command as a result of the incitement operation during the double clutch operation.

Further, in the first aspect of the invention, the criterial time may be set for each shift stage of the manual transmission.

According to the control apparatus for the manual transmission-mounted vehicle according to the first aspect of the invention, the criterial time is set for each shift stage of the manual transmission. Therefore, the criterial time is prevented from being set unnecessarily long by being set in accordance with a shift stage. Thus, the time in which the shift operation command is stopped can be reduced while restraining the shift command device from issuing an erroneous command as a result of the incitement operation during the double clutch operation.

Further, in the first aspect of the invention, the shift command stop means may suspend calculation of the actual gear stage by the shift command device for a predetermined time after the double clutch operation determination means determines that the double clutch operation has been performed.

According to the control apparatus for the manual transmission-mounted vehicle according to the first aspect of the invention, the shift command stop means suspends calculation of the actual gear stage by the shift command device for the predetermined time after the double clutch operation determination means determines that the double clutch operation has been performed. Therefore, the shift command device is temporarily stopped from outputting a command for the predetermined time after it is determined that the double clutch operation has been performed. Thus, the shift command device can be restrained from issuing an erroneous command regarding the double clutch operation.

Further, in the first aspect of the invention, the shift command stop means may suspend calculation of the actual gear stage by the shift command device until a predetermined accelerator operation is performed after the double clutch operation determination means determines that the double clutch operation has been performed.

Further, according to the control apparatus for the manual transmission-mounted vehicle according to the first aspect of the invention, the shift command stop means suspends calculation of the actual gear stage by the shift command device until the predetermined accelerator operation is performed after the double clutch operation determination means determines that the double clutch operation has been performed. Therefore, the shift command device is temporarily stopped from outputting a command until the predetermined accelerator operation, namely, an acceleration operation by the accelerator pedal is performed after it is determined that the double clutch operation has been performed. Thus, the shift command device can be restrained from issuing an erroneous command regarding the double clutch operation.

It should be noted herein that the main switch of the vehicle is a switch that makes the control apparatus of the vehicle operable by supplying electric power thereto (the operation of turning the control apparatus on) and makes the control apparatus inoperable by shutting off the supply of electric power thereto (the operation of turning the control apparatus off). For example, this switch may be regarded as equivalent to an ignition switch or the like in a vehicle driven by an engine. It is also possible to separately provide a switch for the operation of turning the control apparatus on and a switch for the operation of turning the control apparatus off.

In a second aspect of the invention, a control method for a manual transmission-mounted vehicle equipped with a manual transmission whose shift stage is changed over through a shift operation by a shift lever during an operation of a clutch pedal, and a shift command device that commands a driver to perform the shift operation of the shift lever includes making a determination on a double clutch operation by the driver, and temporarily stopping the shift command device from outputting a command when it is determined that the double clutch operation has been performed.

The control method for the manual transmission-mounted vehicle according to the second aspect of the invention includes a double clutch operation determination step of making the determination on the double clutch operation by the driver, wherein a double clutch operation is defined as the process of depressing the clutch pedal to operate a shift lever to neutral, releasing the clutch pedal to reengage the clutch, increasing the engine rotational speed by inciting the accelerator, depressing the clutch pedal again and operating the shift lever to a shift position corresponding to the desired shift stage, releasing the clutch pedal again to engage the clutch and to complete a shift, and a shift command stop step of temporarily stopping the shift command device from outputting the command when it is determined through the double clutch operation determination step that the double clutch operation has been performed. Therefore, the shift command device can be restrained from issuing an erroneous command regarding the double clutch operation.

BRIEF DESCRIPTION OF THE DRAWINGS

The foregoing and further features and advantages of the invention will become apparent from the following description of example embodiments with reference to the accompanying drawings, wherein like numerals are used to represent like elements, and wherein:

FIG 1 is a view showing a power transmission mechanism for a vehicle to which the first embodiment of the invention is applied, and a control system provided in the vehicle;
FIG 2 is a view showing an indicator including a shift commander of FIG 1;
FIG. 3 is a functional block diagram for explaining essential ones of control functions of an electronic control unit shown in FIG 1, which includes a shift command control portion of a shift command device;
FIG 4 is a view showing a shift diagram stored in advance, which is composed of a plurality of shift lines set on a two-dimensional coordinate plane with a vehicle speed axis and an accelerator operation amount axis;
FIG 5 is a view showing an actual gear stage calculation map stored in advance, which is composed of a plurality of criterial regions set on a two-dimensional coordinate plane with an engine rotational speed axis and an NVR axis;
FIGS. 6A, 6B are flowcharts for explaining an essential part of a control action performed through a signal processing of the electronic control unit of FIG 1;
FIG 7 is a flowchart for explaining an essential part of a control action performed through a signal processing of the electronic control unit of FIG 1;
FIG 8 is a time chart for explaining the control action of the electronic control unit of FIG 1, showing in a time-series manner an example of a clutch operation signal, an engine rotational speed, and an accelerator operation amount during the performance of a double clutch operation;
FIG 9 is a functional block diagram for explaining essential ones of control functions of an electronic control unit according to the second embodiment of the invention;
FIG 10 is a map showing a criterial time preset and stored for each shift stage;
FIG 11 is a flowchart for explaining an essential part of a control action performed through a signal processing of the electronic control unit of FIG. 9;
FIG. 12 is a time chart for explaining the control action of the electronic control unit of FIG. 9, showing in a time-series manner an example of a clutch operation signal, an engine rotational speed, and an accelerator operation amount during the performance of the double clutch operation; and
FIG 13 is a flowchart for explaining an essential part of a control action performed through a signal processing of the electronic control unit according to the second embodiment of the invention.

DETAILED DESCRIPTION OF EMBODIMENTS

The first embodiment of the invention will be described hereinafter in detail with reference to the drawings. In the following embodiments of the invention, the drawings are appropriately simplified or modified, and the dimensional ratios, shapes, and the like of respective components are not necessary drawn with accuracy.

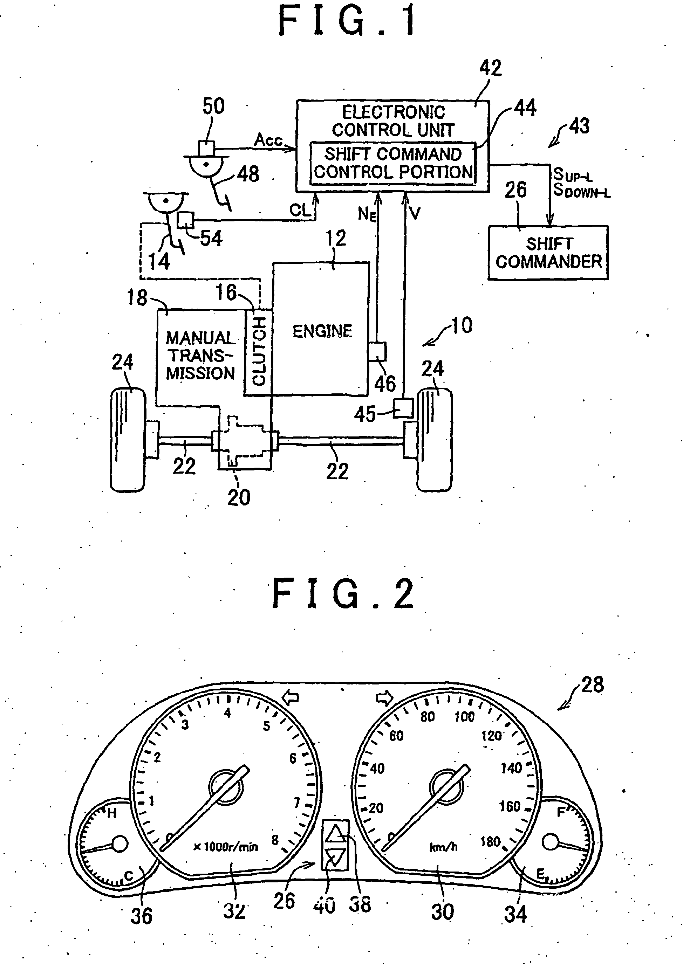

FIG 1 is a view showing a power transmission mechanism 10 for a vehicle to which the first embodiment of the invention is applied, and a control system provided in the vehicle. In FIG. 1, the power transmission mechanism 10 is designed for a front-engine front-drive (FF) vehicle, and is equipped with an engine 12 as a power source for running, a clutch 16 that shuts off the transmission of power between the engine 12 and a later-described manual transmission 18 through an operation of depressing a clutch pedal 14, the manual transmission 18 that makes a changeover in shift stage through a shift operation by a shift lever (not shown) during the operation of the clutch pedal 14, a differential gear mechanism 20 that rotationally drives a pair of right and left drive shafts 22 while allowing a difference in rotational speed therebetween, the pair of the drive shafts 22, and a pair of driving wheels (front wheels) 24. A power generated by the engine 12 is transmitted to the pair of the driving wheels 24 via the clutch 16, the manual transmission 18, the differential gear mechanism 20, and the pair of the drive shafts 22.

A shift commander 26 is provided in the vicinity of a driver seat to command a driver to perform a shift operation by the shift lever. FIG 2 is a view showing an indicator 28 including the shift commander 26 of FIG 1. As shown in FIG 2, the indicator 28 is equipped with a speedometer 30 that indicates a vehicle speed V [km/h], a tachometer 32 that indicates an engine rotational speed $N_E$ [rpm], a fuel meter 34, a coolant temperature meter 36, and the like, in addition to the shift indicator 26.

The shift indicator 26 is equipped with an upshift indicator lamp 38 and a downshift indicator lamp 40. The upshift indicator lamp 38 assumes the shape of a triangle with an angle directed upward as viewed from the driver, namely, upward on the sheet of FIG 2, and is lit in accordance with the supply of an upshift indication signal $S_{UP-L}$ from a later-described electronic control unit 42 to command the driver to perform an upshift. The downshift indicator lamp 40 assumes the shape of a triangle with an angle directed downward as viewed from the driver, namely, downward on the sheet of FIG. 2, and is lit in accordance with the supply of a downshift indication signal $S_{DOWN-L}$ from the later-described electronic control unit 42 to command the driver to perform a downshift. A case where both the upshift indicator lamp 38 and the downshift indicator lamp 40 are unlit means that the driver is commanded to maintain a current shift stage. The upshift indicator lamp 38 and the downshift indicator lamp 40 are constructed of, for example, semiconductor elements that emit light when a current is supplied thereto, namely, light emitting diodes (LED).

Returning to FIG 1, the electronic control unit (control apparatus) 42 functions as the control apparatus for the manual transmission-equipped vehicle that is equipped with the manual transmission 18 and a shift command device (GSI) 43 that has the shift commander 26 and commands the driver to perform a shift operation of the shift lever. That is, the electronic control unit 42 is constructed with a so-called microcomputer equipped with a CPU, a RAM, a ROM, an input/output interface, and the like. The electronic control unit 42 performs a signal processing in accordance with a program stored in advance in the ROM while utilizing a temporary storage function of the RAM, and thereby performs output control of the engine 12, shift command control of controlling the lighting of the upshift indicator lamp 38 of the shift commander 26 and the downshift indicator lamp 40 of the shift commander 26. The electronic control unit 42 in this embodiment of the invention is constructed with a shift command control portion 44 for the shift command control.

The shift command device 43 is equipped with the shift commander 26 and the shift command control portion 44. The shift command device 43 calculates an actual gear stage, namely, an actual gear stage $G_{REAL}$ on the basis of the engine rotational speed $N_E$ corresponding to a rotational speed of an input shaft of the manual transmission 18 and the vehicle speed V corresponding to a rotational speed of an output shaft of the manual transmission 18, calculates a required gear stage (target gear stage) $G_{REQUEST}$ on the basis of the vehicle speed V and an acceleration operation amount Acc, and indicates a command to perform a shift operation for making the actual gear stage $G_{REAL}$ coincident with the required gear stage $G_{REQUEST}$.

As shown in FIG 1, signals indicating the vehicle speed V, the engine rotational speed $N_E$, the accelerator operation amount Acc, a clutch operation signal CL, and the like are supplied to the electronic control unit 42 from a vehicle speed sensor 45 for detecting the vehicle speed V, an engine rotational speed sensor 46 for detecting the engine rotational speed $N_E$, an accelerator operation amount sensor 50 for detecting an operation amount of an accelerator pedal 48, namely, the accelerator operation amount Acc [%], a clutch switch 54 for detecting the clutch operation signal CL, which indicates that the clutch pedal 14 has been operated, and the like respectively.

Further, an upshift command signal $S_{UP-L}$ for lighting the upshift indicator lamp 38, a downshift command signal $S_{DOWN-L}$ for lighting the downshift indicator lamp 40, or the like is output from the electronic control unit 42.

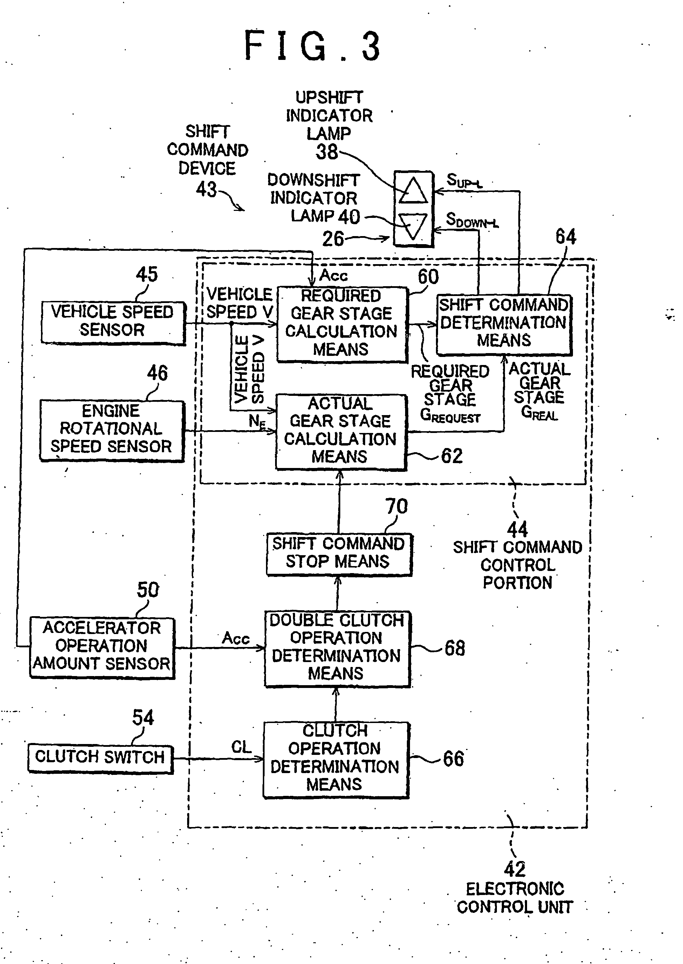

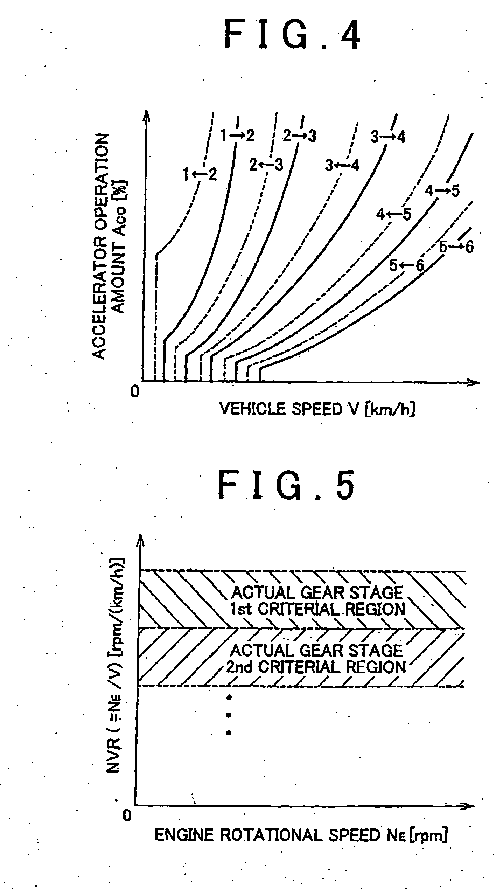

FIG 3 is a functional block diagram for explaining essential ones of control functions of the electronic control unit 42 including the shift command control portion 44. In FIG. 3, required gear stage calculation means 60 calculates, on the basis of the actual vehicle speed V and the accelerator operation amount Acc, the required gear stage $G_{REQUEST}$ to be established through a shift by the manual transmission 18 from a shift diagram (shift map) stored in advance, which is composed of a plurality of shift lines set on a two-dimensional coordinate plane with a vehicle speed axis and an accelerator operation amount axis as shown in, for example, FIG 4. The shift diagram is experimentally obtained in advance such that the vehicle can be driven with good fuel consumption while bringing out the performance of the vehicle sufficiently. It should be noted that the required gear stage $G_{REQUEST}$ can be calculated in various modes, for example, on the basis of an opening degree of a throttle valve, an amount of intake air, a gradient of a road surface, or the like.

In FIG. 4, deceleration-side shift lines (downshift lines) indicated by dotted lines prescribe shift timings to a deceleration side and are determined for intervals among the gear stages respectively. That is, when the position indicating a vehicle state specified on the shift diagram on the basis of the actual vehicle speed V and the accelerator operation amount Acc moves from a region on the right of a certain one of the deceleration-side shift lines to a region on the left thereof, the required gear stage calculation means 60 determines that a shift to the deceleration side should be made, and sets a gear stage corresponding to that deceleration-side shift line as the required gear stage $G_{REQUEST}$. More specifically, when the position specified on the shift diagram on the basis of the actual vehicle speed V and the accelerator operation amount Acc crosses, for example, a 2→1 shift line in FIG 4 from right to left, the required gear stage calculation means 60 determines that a shift from the second gear stage to the first gear stage should be made, and sets the first gear stage as the required gear stage $G_{REQUEST}$. When the position specified on the shift diagram crosses a 3→2 shift line, a 4→3 shift line a 5→4 shift line, or a 6→5 shift line from right to left, the required gear stage calculation means 60 sets the second gear stage, the third gear stage, the fourth gear stage, or the fifth gear stage as the required gear stage $G_{REQUEST}$ respectively.

Further, in FIG 4, acceleration-side shift lines (upshift lines) indicated by solid lines prescribe shift timings to an acceleration side and are determined for intervals among the gear stages respectively. That is, when the position indicating a vehicle state specified on the shift diagram on the basis of the actual vehicle speed V and the accelerator operation amount Acc moves from a region on the left of a certain one of the acceleration-side shift lines to a region on the right thereof, the required gear stage calculation means 60 determines that a shift to the acceleration side should be made, and sets a gear stage corresponding to that acceleration-side shift line as the required gear stage $G_{REQUEST}$. More specifically, when the position specified on the shift diagram on the basis of the actual vehicle speed V and the accelerator operation amount Acc crosses, for example, a 1→2 shift line in FIG. 4 from left to right, the required gear stage calculation means 60 determines that a shift from the first gear stage to the second gear stage should be made, and sets the second gear stage as the required gear stage $G_{REQUEST}$. When the position specified on the shift diagram crosses a 2→3 shift line, a 3→4 shift line, a 4→5 shift line, or a 5→6 shift line from left to right, the required gear stage calculation means 60 sets the third gear stage, the fourth gear stage, the fifth gear stage, or the sixth gear stage as the required gear stage $G_{REQUEST}$ respectively.

Returning to FIG 3, the actual gear stage calculation means 62 calculates an actual gear stage of the manual transmission 18, namely, the actual gear stage $G_{REAL}$ on the basis of the actual engine rotational speed $N_E$ and the vehicle speed V, from a relationship stored in advance, which is composed of a plurality of criterial regions set on a two-dimensional coordinate plane with an engine rotational speed axis and an NVR axis as shown in, for example, FIG. 5, namely, an actual gear stage calculation map. In FIG 5, an axis of abscissa indicates the engine rotational speed $N_E$, and an axis of ordinate indicates a value obtained by dividing the engine rotational speed $N_E$ by the vehicle speed V, namely, the NVR value. Further, the aforementioned relationship is experimentally obtained in advance. It should be noted that various modes are possible. For example, the engine rotational speed $N_E$ and the vehicle speed V correspond to the rotational speed of the input shaft of the manual transmission 18 and the rotational speed of the output shaft of the manual transmission 18 respectively, and the actual gear stage calculation means 62 calculates the actual gear stage $G_{REAL}$ on the basis of the actual rotational speed of the input shaft of the manual transmission 18 and the actual rotational speed of the output shaft of the manual transmission 18 from a relationship (map) stored in advance using the rotational speed of the input shaft and the rotational speed of the output shaft as parameters.

In the actual gear stage calculation map shown in FIG 5, the plurality of the criterial regions are determined for the intervals among the gear stages respectively. When the position specified on the actual gear stage calculation map on the basis of the actual engine rotational speed $N_E$ and the actual vehicle speed V is in one of the plurality of the criterial regions, for example, the first gear stage criterial region, the actual gear stage calculation means 62 determines that the actual gear stage $G_{REAL}$ of the manual transmission 18 is the first gear stage, and sets the first gear stage as the actual gear stage $G_{REAL}$. Further, when the position specified on the actual gear stage calculation map is in the second gear stage criterial region, the third gear stage criterial region, the fourth gear stage criterial region, the fifth gear stage criterial region, or the sixth gear stage criterial region, the actual gear stage calculation means 62 sets the second gear stage, the third gear stage, the fourth gear stage, the fifth gear stage, or the sixth gear stage as the actual gear stage $G_{REAL}$. In the actual gear stage calculation map of FIG 5, while the first gear stage criterial region and the second gear stage criterial region are shown, the third through sixth gear stage criterial regions are not shown.

Returning to FIG. 3 again, the shift command determination means 64 determines whether or not a predetermined signal should be output to the shift commander 26 from a predetermined relationship, on the basis of the required gear stage $G_{REQUEST}$ calculated by the required gear stage calculation means 60 and the actual gear stage $G_{REAL}$ calculated by the actual gear stage calculation means 62. The upshift command signal $S_{UP-L}$ for lighting the upshift indicator lamp or the downshift command signal $S_{DOWN-L}$ for lighting the downshift indicator lamp may be regarded as equivalent to the predetermined signal. More specifically, the shift command determination means 64 outputs the upshift command signal $S_{UP-L}$ to the shift commander 26 when the actual gear stage $G_{REAL}$ is smaller than the required gear stage $G_{REQUEST}$. Further, the shift command determination means 64 outputs the downshift command signal $S_{DOWN-L}$ to the shift commander 26 when the actual gear stage $G_{REAL}$ is larger than the required gear stage $G_{REQUEST}$. Further, the shift command determination means 64 outputs neither the upshift command signal $S_{UP-L}$ nor the downshift command signal $S_{DOWN-L}$ to the shift commander 26 when the actual gear stage $G_{REAL}$ is the same as the required gear stage $G_{REQUEST}$. Thus, both the upshift indicator lamp and the downshift indicator lamp are extinguished. Further, the shift command determination means 64 outputs neither the upshift command signal $S_{UP-L}$ nor the downshift command signal

$S_{DOWN-L}$ to the shift commander 26 when at least one of the actual gear stage $G_{REAL}$ and the required gear stage $G_{REQUEST}$ is indefinite. Thus, the shift commander 26 is temporarily stopped from outputting a command while at least one of the actual gear stage $G_{REAL}$ and the required gear stage $G_{REQUEST}$ is indefinite.

The clutch operation determination means 66 makes a determination on an engagement state of the clutch 16 on the basis of the presence or absence of the clutch operation signal CL. That is, the clutch operation determination means 66 determines, on the basis of the outputting of the clutch operation signal CL from the clutch switch 54, that the clutch 16 is disengaged, and determines, on the basis of the absence of the outputting of the clutch operation signal CL from the clutch switch 54, that the clutch 16 is engaged.

The double clutch operation determination means 68 determines, on the basis of an incitement operation of the accelerator pedal 48 immediately after an operation of depressing and returning the clutch pedal 14, that a double clutch operation has been started. More specifically, the double clutch operation determination means 68 determines that the double clutch operation has been performed, when the incitement operation of the accelerator pedal 48 is performed before the lapse of a first waiting time T1 [s] after the clutch operation determination means 66 determines that a changeover from disengagement of the clutch 16 to engagement of the clutch 16 has been made. The first waiting time T1 is set to, for example, about 1 [s]. The incitement operation means an operation of abruptly opening and then abruptly closing the accelerator pedal 48 within a certain time. The double clutch operation determination means 68 according to this embodiment of the invention determines that the incitement operation has been performed, when a negative value of an accelerator opening speed $V_{ACC}$ equal to or larger than a certain value is detected after the detection of a positive value of the accelerator opening speed $V_{ACC}$ equal to or larger than a certain value on the basis of the accelerator opening speed $V_{ACC}$ calculated from an amount of increase or decrease in the accelerator operation amount Acc output from the accelerator operation amount sensor 50 within a certain time.

The shift command stop means 70 suspends calculation of the actual gear stage $G_{REAL}$ by the actual gear stage calculation means 62 and calculation of the required gear stage $G_{REQUEST}$ by the required gear stage calculation means 60 and sets the actual gear stage $G_{REAL}$ and the required gear stage $G_{REQUEST}$ indefinite until a second waiting time (predetermined time) T2 [s] elapse or a predetermined accelerator operation is performed after the double clutch operation determination means 68 determines that the double clutch operation has been performed. The predetermined accelerator operation means an acceleration operation by an accelerator pedal, for example, an operation of continuing to depress the accelerator pedal 48 for a predetermined time such as about 1 [s]. When the shift command stop means 70 sets the actual gear stage $G_{REAL}$ and the required gear stage $G_{REQUEST}$ indefinite, the shift command determination means 64 outputs neither the upshift command signal $S_{UP-L}$ nor the downshift command signal $S_{DOWN-L}$ to the shift commander 26. Thus, the shift command stop means 70 temporarily stops the shift command device 43 from outputting a command when the double clutch operation determination means 68 determines that the double clutch operation has been performed.

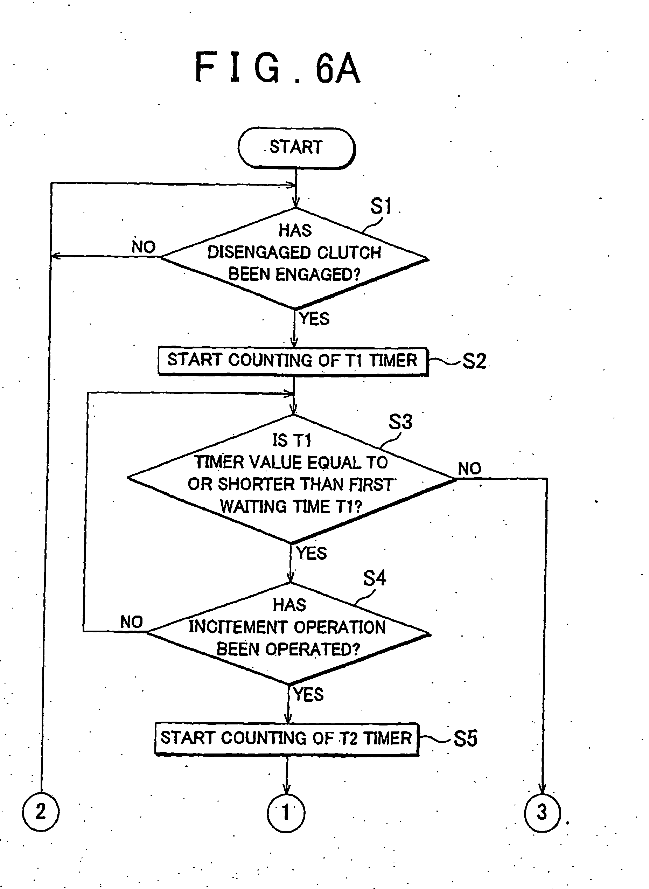

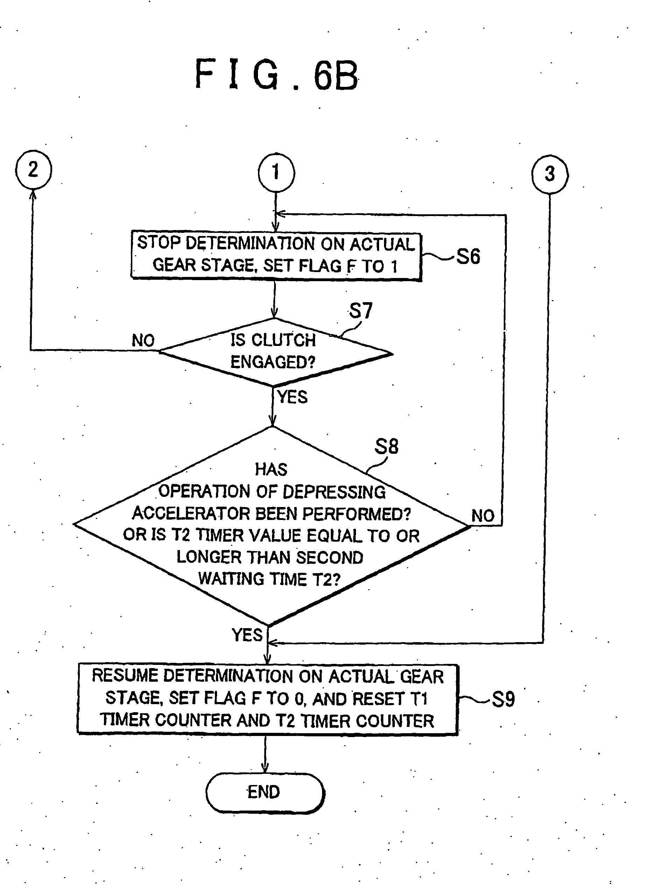

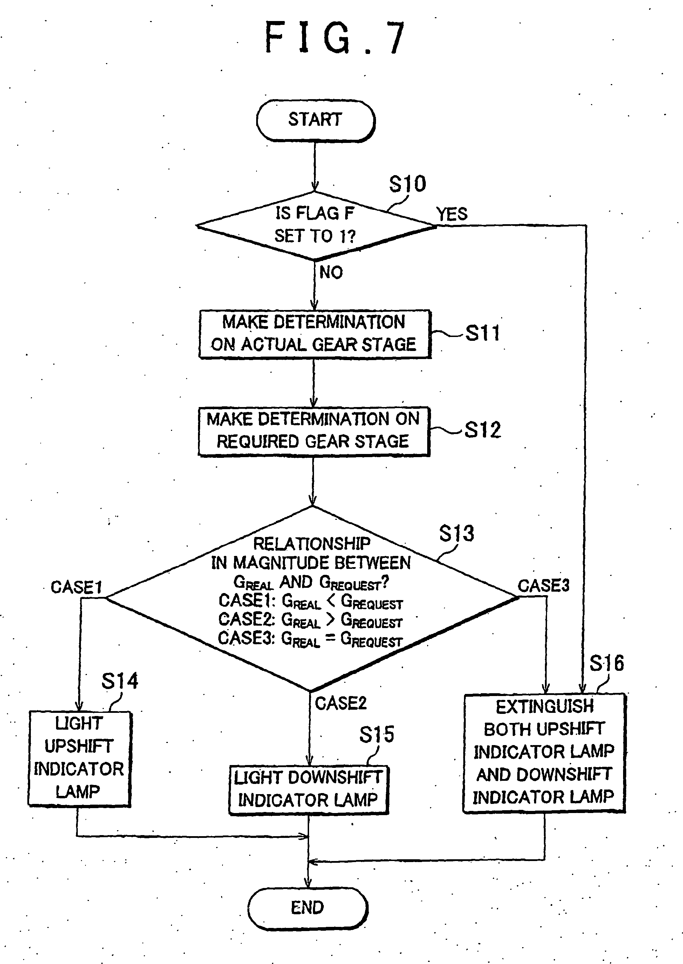

FIGS. 6A, 6B and 7 are flowcharts for explaining an essential part of a control action performed through a signal processing of the electronic control unit 42. These flowcharts show a series of procedures of issuing a command to perform a shift operation off the shift lever to make the actual gear stage $G_{REAL}$ coincident with the required gear stage $G_{REQUEST}$. The respective routines are repeatedly executed in parallel at predetermined intervals of, for example, several milliseconds to dozens of milliseconds.

First of all, FIGS. 6A and 6B will be described. In FIGS. 6A and 6B, first of all, in step S1 (the term "step" will be omitted hereinafter) corresponding to the clutch operation determination means 66, it is determined whether or not a changeover from disengagement of the clutch 16 to engagement of the clutch 16 has been made.

When the determination in S1 is denied, the processings starting from S1 are repeatedly performed. However, when the determination in S1 is affirmed, the counting of the time of a T1 timer is started in S2 corresponding to the double clutch operation determination means 68.

Then, in S3 corresponding to the double clutch operation determination means 68, it is determined whether or not the first waiting time T1 has failed to elapse since a time point corresponding to the changeover from disengagement of the clutch 16 to engagement of the clutch 16, namely, whether or not the timer count value of the T1 timer is equal to or shorter than the first waiting time T1.

When the determination in S3 is denied, a later-described processing in S9 is performed. However, when the determination in S3 is affirmed, it is determined in S4 corresponding to the double clutch operation determination means 68 whether or not an incitement operation has been performed. In this embodiment of the invention, the determination in S4 is affirmed when a negative value of the accelerator opening speed $V_{ACC}$ equal to or larger than a certain value is detected after the detection of a positive value of the accelerator opening speed $V_{ACC}$ equal to or larger than a certain value on the basis of the accelerator opening speed $V_{ACC}$ calculated from an amount of increase or decrease in the accelerator operation amount Acc output from the accelerator operation amount sensor 50 within a certain time.

When the determination in S4 is denied, the processings starting from S3 are repeatedly performed. However, when the determination in S4 is affirmed, the counting of the time of a T2 timer is started in S5 corresponding to the shift command stop means 70.

Then, in S6 corresponding to the shift command stop means 70, a flag F is set to 1 to suspend calculation of the actual gear stage $G_{REAL}$ and the required gear stage $G_{REQUEST}$. As a result, the actual gear stage $G_{REAL}$ and the required gear stage $G_{REQUEST}$ are set indefinite.

Then, in S7 corresponding to the clutch operation determination means 66, it is determined whether or not the clutch 16 is engaged.

When the determination in S7 is denied, the processings starting from S1 are repeatedly performed. However, when the determination in S7 is affirmed, it is determined in S8 corresponding to the shift command stop means 70 whether or not the operation of depressing the accelerator pedal 48 has been performed for a period equal to or longer than 1 [s] since a time point corresponding to the determination that the incitement operation has been performed, or whether or not the time count value of the T2 timer is equal to or longer than a second waiting time T2.

When the determination in S8 is denied, the processings starting from S6 are repeatedly performed. However, when the determination in S8 is affirmed or when the determination in S3 is denied, the flag F is set to 0 to resume calculation of the actual gear stage in S9 corresponding to the shift command stop means 70. The T1 timer and the T2 timer are then reset to terminate the present routine.

Then, FIG 7 will be described. In FIG 7, first of all, it is determined in S10 corresponding to the shift command determination means 64 whether or not the flag F has been set to 1 to suspend calculation of the actual gear stage $G_{REAL}$ and the required gear stage $G_{REQUEST}$. It should be noted herein that the setting of the flag F to 1 is synonymous with the indefiniteness of the actual gear stage $G_{REAL}$ or the required gear stage $G_{REQUEST}$.

When the determination in S10 is affirmed, a later-described processing in S16 is performed. However, when the determination in S10 is denied, in S11 corresponding to the actual gear stage calculation means 62, the actual gear stage of the manual transmission 18, namely, the actual gear stage $G_{REAL}$ is calculated on the basis of the actual engine rotational speed $N_E$ and the vehicle speed V from an actual gear stage calculation map stored in advance as shown in FIG 5.

Then, in S12 corresponding to the required gear stage calculation means 60, the required gear stage $G_{REQUEST}$ to be established through a shift by the manual transmission 18 is calculated on the basis of the actual vehicle speed V and the actual accelerator operation amount Acc, from the shift diagram stored in advance as shown in FIG 4.

Then, it is determined in S13 corresponding to the shift command determination means 64 which one of three cases CASE 1, CASE 2, and CASE 3 corresponds to a relationship in magnitude between the actual gear stage $G_{REAL}$ calculated in S11 and the required gear stage $G_{REQUEST}$ calculated in S12. That is, when the actual gear stage $G_{REAL}$ is smaller than the required gear stage $G_{REQUEST}$, it is determined that the relationship in magnitude therebetween is CASE 1. Further, when the actual gear stage $G_{REAL}$ is larger than the required gear stage $G_{REQUEST}$, it is determined that the relationship in magnitude therebetween is CASE 2. Further, when the actual gear stage $G_{REAL}$ is the same as the required gear stage $G_{REQUEST}$, it is determined that the relationship in magnitude therebetween is CASE 3.

When it is determined in S13 that the relationship in magnitude is CASE 1, the upshift command signal $S_{UP-L}$ is output to the shift commander 26 in S14 corresponding to the shift command determination means 64. The upshift indicator lamp is then lit to terminate the present routine.

When it is determined in S13 that the relationship in magnitude is CASE 2, the downshift command signal $S_{DOWN-L}$ is output to the shift commander 26 in S15 corresponding to the shift command determination means 64. The downshift indicator lamp is then lit to terminate the present routine.

When it is determined in S13 that the relationship in magnitude is CASE 3 or when the determination in S10 is affirmed, neither the upshift command signal $S_{UP-L}$ nor the downshift command signal $S_{DOWN-L}$ is output to the shift commander 26 in S16 corresponding to the shift command determination means 64. Both the upshift indicator lamp and the downshift indicator lamp are then extinguished to terminate the present routine.

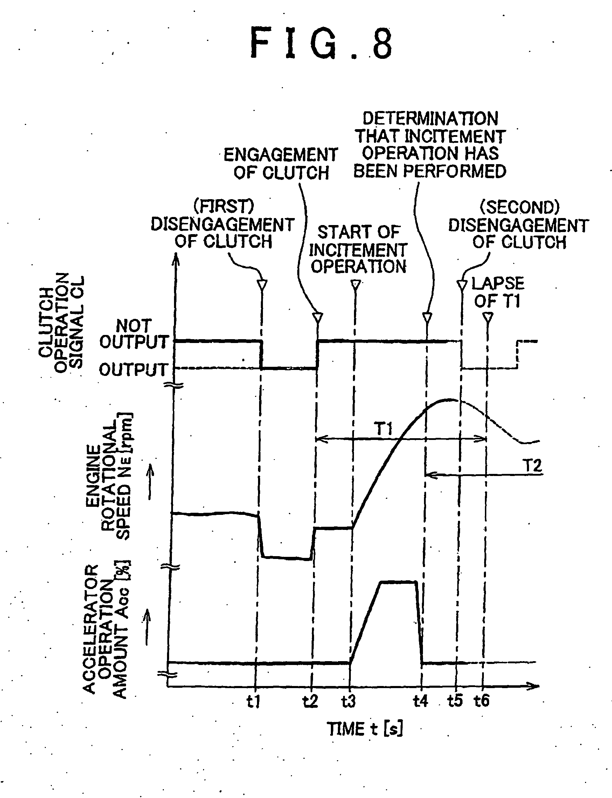

FIG 8 is a time chart for explaining a control action of the electronic control unit 42 shown in FIGS. 6A and 6B, showing in a time-series manner an example of the clutch operation signal CL, the engine rotational speed $N_E$, and the accelerator operation amount Acc during the performance of the double clutch operation. In FIG 8, an axis of abscissa represents a time t [s], and a time point t1 represents a time point at which the operation of depressing the clutch pedal 14 is performed to disengage the clutch 16. Thus, the clutch operation signal CL is output from the clutch switch 54, and the engine rotational speed $N_E$ is reduced to a speed in the vicinity of an engine rotational speed $N_{E-IDLE}$ during idling. It should be noted that the shift lever is operated to an N position corresponding to a neutral position for shutting off a power transmission path between the time point t1 and a time point t2.

The time point t2 represents a time point at which the operation of returning the clutch pedal 14 is performed to engage the clutch 16. Thus, the clutch switch 54 is stopped from outputting the clutch operation signal CL, and the engine rotational speed $N_E$ is raised to a predetermined rotational speed. At this time point t2, the determination in S1 of FIG 6A is affirmed. The processings in S2 to S4 of FIG. 6A are swiftly performed immediately thereafter. A time point t6 represents a time point corresponding to the lapse of the first waiting time T1 from the time point t2. The determination in S3 of FIG 6A is affirmed between the time point t2 and a time point immediately before the time point t6.

From the time point t3 to the time point t4, the operation of abruptly opening and then abruptly closing the accelerator pedal 48, namely, the so-called incitement operation is performed. That is, the time point t3 represents a time point at which the operation of abruptly opening the accelerator pedal 48 is started, and the time point t4 represents a time point at which the operation of abruptly closing the accelerator pedal 48 is terminated. In response to this incitement operation, the engine rotational speed $N_E$ is appropriately raised. In this embodiment of the invention, the determination in S4 of FIG 6A is affirmed at the time point t4, and the processings in S5 to S7 of FIGS. 6A and 6B are swiftly performed immediately thereafter. A time point t5 represents a time point at which the second operation of the clutch pedal 14 is started.

As described above, the manual transmission-equipped electronic control unit 42 according to this embodiment of the invention is equipped with the manual transmission 18 whose shift stage is changed over through a shift operation by the shift lever during an operation of the clutch pedal 14, and the shift command device 43 that commands the driver to perform the shift operation of the shift lever. This electronic control unit 42 includes the double clutch operation determination means 68 for making a determination on a double clutch operation by the driver, and the shift command stop means 70 for temporarily stopping the shift command device 43 from outputting a command when the double clutch operation determination means 68 determines that the double clutch operation has been performed. Therefore, the upshift indicator lamp 38 of the shift commander 26 and the downshift indicator lamp 40 of the shift commander 26 can be restrained from being erroneously lit as a result of the double clutch operation.

Further, the shift command, device 43, which is equipped with the shift commander 26 and the shift command control portion 44, calculates the actual gear stage, namely, the actual gear stage $G_{REAL}$ on the basis of the engine rotational speed $N_E$ corresponding to the rotational speed of the input shaft of the manual transmission 18 and the vehicle speed V corresponding to the rotational speed of the output shaft of the manual transmission 18, calculates the required gear stage $G_{REQUEST}$ on the basis of the vehicle speed V and the accelerator operation amount Acc, and indicates a command to perform a shift operation for making the actual gear stage $G_{REAL}$ coincident with the required gear stage $G_{REQUEST}$. Therefore, according to the electronic control unit 42 of this embodiment of the invention, in the shift command device 43 designed to calculate the actual gear stage $G_{REAL}$ of the manual transmission 18 on the basis of the engine rotational speed $N_E$ and the vehicle speed V in response to the performance of the double clutch operation, the upshift indicator lamp 38 of the shift commander 26 and the downshift indicator lamp 40 of the shift commander 26 can be restrained from being erroneously lit as a result of the double clutch operation.

Further, according to the electronic control unit 42 of this embodiment of the invention, the double clutch operation determination means 68 determines, on the basis of the performance of the operation of abruptly opening and then abruptly closing the accelerator pedal 48, namely, the so-called incitement operation immediately after the operation of depressing and returning the clutch pedal 14, that the double clutch operation has been performed. Therefore, the accelerator operation amount Acc is instantaneously fluctuated with respect to the predetermined vehicle speed V through the incitement operation of the accelerator pedal in the course of the shift. Thus, the upshift indicator lamp 38 and the downshift indicator lamp 40 can be prevented from incongruously lit as is the case with the shift command device 43 designed to calculate the actual gear stage $G_{REAL}$ of the manual transmission 18 on the basis of the engine rotational speed $N_E$ and the vehicle speed V.

Further, according to the electronic control unit 42 of this embodiment of the invention, the shift command stop means 70 suspends calculation of the actual gear stage $G_{REAL}$ by the shift command device 43 before the lapse of the predetermined time, namely, the second waiting time T2 after the time point at which the double clutch operation determination means 68 determines that the double clutch operation has been performed. Therefore, the shift command device 43 is temporarily stopped from outputting a command before the lapse of the second waiting time T2 after the time point corresponding to the determination that the double clutch operation has been performed. Thus, the upshift indicator lamp 38 and the downshift indicator lamp 40 can be restrained from being erroneously lit as a result of the double clutch operation.

Further, according to the electronic control unit 42 of this embodiment of the invention, the shift command stop means 70 suspends calculation of the actual gear stage by the shift command device 43 until the predetermined accelerator operation is performed after the double clutch operation determination means 68 determines that the double clutch operation has been performed. Therefore, the shift command device 43 is temporarily stopped from outputting a command until the accelerator pedal continues to be operated for a certain time after the determination that the double clutch operation has been performed. Thus, the upshift indicator lamp 38 and the downshift indicator lamp 40 can be restrained from being erroneously lit as a result of the double clutch operation.

Next, the second embodiment of the invention will be described. In the following description of the embodiments of the invention, components identical to those of the foregoing first embodiment of the invention are denoted by the same reference symbols respectively and will not be described any further.

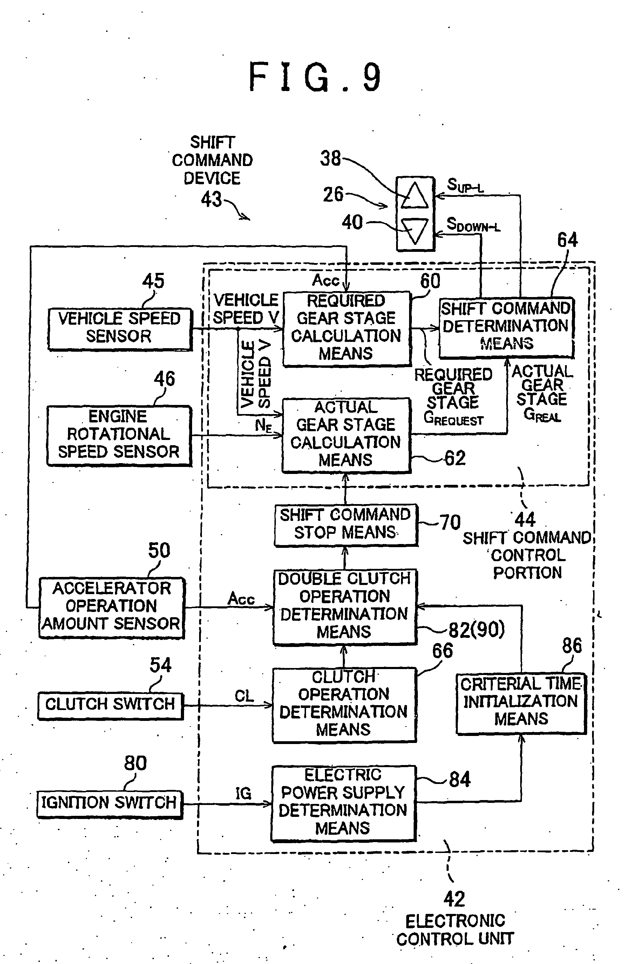

In addition to the vehicle speed V, the engine rotational speed $N_E$, the accelerator operation amount Acc, the clutch operation signal CL, and the like in the first embodiment of the invention, an ignition signal IG indicating that an ignition switch 80 as a main switch of the vehicle shown in FIG 9, which will be described later, has been operated to be turned on is supplied from the ignition switch 80 to the electronic control unit (control apparatus) 42 according to this embodiment of the invention. While the ignition signal IG is supplied, the ignition switch 80 has been operated to be turned on so that the electronic control unit 42 as the control apparatus for the vehicle is supplied with electric power. While the ignition signal IG is not supplied, the ignition switch 80 has been operated to be turned off so that the supply of electric power to the vehicle is shut off.

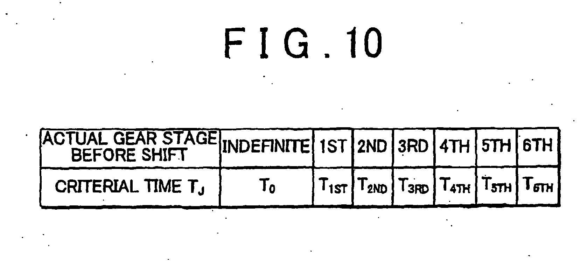

FIG. 9 is a functional block diagram for explaining essential ones of control functions of the electronic control unit 42 according to this embodiment of the invention. In FIG. 9, double clutch operation determination means 82 determines, on the basis of the performance of the incitement operation of the accelerator pedal 48 before the lapse of a preset criterial time $T_J$ after the operation of depressing and returning the clutch pedal 14, that the double clutch operation has been performed. More specifically, in making a shift in the manual transmission 18 having six forward shift stages, namely, the first to sixth forward stages, the double clutch operation determination means 82 determines that the double clutch operation has been performed, when the incitement operation of the accelerator pedal 48 is performed until the criterial time $T_J$ corresponding to a predetermined shift stage considered to have been established before the current shift by the actual gear stage calculation means 62, which may be a critical time $T_{1ST}$, $T_{2ND}$, $T_{3RD}$, $T_{4TH}$, $T_{5TH}$, $T_{6TH}$, or $T_0$ (which will be described hereinafter as the criterial time $T_J$ when no distinction is made thereamong in particular) that is preset and stored for a corresponding one of the shift stages established before the shift as shown in a map exemplified in FIG. 10, elapses after a time point at which the clutch operation determination means 66 determines that a changeover from disengagement of the clutch 16 to engagement of the clutch 16 has been made.

The criterial time $T_{1ST}$, the criterial time $T_{2ND}$, the criterial time $T_{3RD}$, the criterial time $T_{4TH}$, the criterial time $T_{5TH}$, and the criterial time $T_{6TH}$ are values (thresholds) that are used when the shift stage established before the shift is the first shift stage, the second shift stage, the third shift stage, the fourth shift stage, the fifth shift stage, and the sixth shift stage respectively. Further, the criterial time $T_0$ is a value (threshold) that is used when the shift stage established before the shift is indefinite. Each of the criterial time $T_{1ST}$, the criterial time $T_{2ND}$, the criterial time $T_{3RD}$, the criterial time $T_{4TH}$, the criterial 5 time $T_{5TH}$, the criterial time $T_{6TH}$, and the criterial time $T_0$ is preset to about 1 [s] as an initial value and then stored.

The incitement operation means the operation of abruptly opening and then abruptly closing the accelerator pedal 48 within a certain time. For example, the double clutch operation determination means 82 according to this embodiment of the invention determines that the incitement operation has been performed, when a negative value of the accelerator opening speed $V_{ACC}$ equal to or larger than a certain value is detected after the detection of a positive value of the accelerator opening speed $V_{ACC}$ equal to or larger than a certain value on the basis of the accelerator opening speed $V_{ACC}$ calculated from an amount of increase or decrease in the accelerator operation amount Acc output from the accelerator operation amount sensor 50 within a certain time.

Further, when a time from a time point at which it is determined that a changeover from disengagement of the clutch 16 to engagement of the clutch 16 has been made to a time point at which the incitement operation has been performed, namely, a detection time TDCL of the double clutch operation is shorter than the criterial time $T_J$ in the case where it is determined as described above that the double clutch operation has been performed, the double clutch operation determination means 82 reduces the criterial time $T_J$ and makes a learning correction such that the criterial time $T_J$ can be used next time. That is, when the detection time $T_{DCL}$ is shorter than a currently used criterial time $T_{J-NOW}$, a learning correction is made to reduce a subsequently used criterial time $T_{J-NEXT}$. More specifically, for example, the subsequently used criterial time $T_{J-NEXT}$ is calculated from a relationship expressed by a formula (1) shown below on the basis of the detection time $T_{DCL}$ and the currently used criterial time $T_{J-NOW}$, and is set and stored as the new criterial time $T_J$. It should be noted herein that Y in the formula (1) is a coefficient set to a value equal to or larger than 0 and equal to or smaller than 1 for each of the shift stages established before a shift, and is set to, for example, about 0.1 in the first to sixth gear stages in this embodiment of the invention. Accordingly, the double clutch operation determination means 82 functions also as learning correction means for making a learning correction of the criterial time $T_J$.

$$T_{J\text{-}NEXT} = T_{J\text{-}NOW} - \{(T_{J\text{-}NOW} - T_{DCL})^* Y\} \dots (1)$$

Returning to FIG 9, electric power supply determination means 84 determines on the basis of the presence or absence of the ignition signal IG whether or not the ignition switch 80 has been operated to be turned on, namely, whether or not electric power has been supplied to the vehicle (the electronic control unit 42). Further, the electric power supply determination means 84 determines on the basis of the presence or absence of the ignition signal IG whether or not the ignition switch 80 has been operated to be turned off, namely, whether or not the supply of electric power to the vehicle (the electronic control unit 42) has been shut off.

Criterial time initialization means 86 returns the criterial time $T_J$ used in the double clutch operation determination means 82 to a preset initial value when the electric power supply determination means 84 determines that the ignition switch 80 has been operated to be turned on and hence electric power has been supplied to the vehicle.

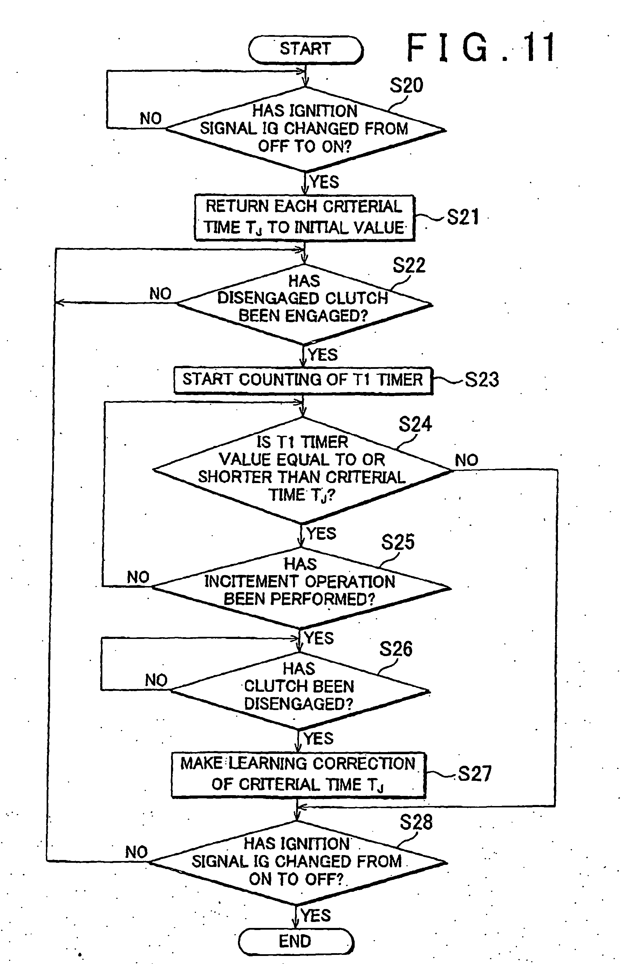

FIGS. 6A, 6B, 7, and 11 are flowcharts for explaining an essential part of a control action performed through a signal processing of the electronic control unit 42. The flowcharts of FIGS. 6A, 6B, and 7 each show a shift operation command control routine, namely, a series of procedures for issuing a command to perform a shift operation of the shift lever to make the actual gear stage $G_{REAL}$ coincident with the required gear stage $G_{REQUEST}$. Further, FIG 11 is a learning control routine for making a learning correction of the criterial time $T_J$ used in the shift operation command control routine. The respective routines are repeatedly executed in parallel at predetermined intervals of, for example, several milliseconds to dozens of milliseconds. This embodiment of the invention is identical to the foregoing first embodiment of the invention except in that the criterial time $T_J$ is used instead of the first waiting time $T_1$ in FIGS. 6A, 6B, and 7.

In FIG. 11, in step S20 (the term "step" will be omitted hereinafter) corresponding to the electric power supply determination means 84, it is determined whether or not the ignition switch 80 has been operated to be turned on, namely, whether or not electric power has been supplied to the vehicle (the electronic control unit 42).

When the determination in S20 is denied, the processings starting from S20 are repeatedly performed. However, when the determination in S20 is affirmed, in S21 corresponding to the criterial time initialization means 86, the criterial time $T_J$ ($T_{1ST}$ to $T_{6TH}$ and To) used in the double clutch operation determination means 82, namely, S3 of FIG 6A and later-described S24 of FIG 11 is returned to a preset initial value, namely, 1 [s].

It is then determined in S22 corresponding to the clutch operation determination means 66 whether or not a changeover from disengagement of the clutch 16 to engagement of the clutch 16 has been made.

When the determination in S22 is denied, the processings starting from S22 are repeatedly performed. However, when the determination in S22 is affirmed, in S23 corresponding to the double clutch operation determination means 82, the T1 timer installed in the electronic control unit 42 starts the measurement of time (the counting of time).

It is then determined in S24 corresponding to the double clutch operation determination means 82 whether or not the predetermined criterial time $T_J$ corresponding to a shift stage established before disengagement of the clutch 16 has failed to elapse after a time point corresponding to the changeover from disengagement of the clutch 16 to engagement of the clutch 16, namely, whether or not a time measurement value of the T1 timer is equal to or shorter than the predetermined time $T_J$.

When the determination in S24 is denied, a later-described processing in S28 is performed. However, when the determination in S24 is affirmed, it is determined in S25 corresponding to the double clutch operation determination means 82 whether or not the incitement operation has been performed. In this embodiments of the invention, the determination in S25 is affirmed when a negative value of the accelerator opening speed $V_{ACC}$ equal to or larger than a certain value is detected after the detection of a positive value of the accelerator opening speed $V_{ACC}$ equal to or larger than a certain value on the basis of the accelerator opening speed $V_{ACC}$ calculated from an amount of increase or decrease in the accelerator operation amount Acc output from the accelerator operation 5 amount sensor 50 within a certain time.

When the determination in S25 is denied, the processings starting from S24 are repeatedly performed. However, when the determination in S25 is affirmed, it is determined in S26 corresponding to the clutch operation determination means 66 whether or not the clutch 16 is disengaged.

When the determination in S26 is denied, the processings starting from S26 are repeatedly performed. However, when the determination in S26 is affirmed, a learning correction is made to reduce a predetermined criterial time $T_{J-NEXT}$ used in the subsequent routine on the basis of the formula (1) in the case where a time from a time point at which the T1 timer starts the measurement of time in S23 to a time point at which it is determined in S25 that the incitement operation has been performed, namely, the detection time $T_{DCL}$ of the double clutch operation is shorter than a predetermined criterial time $T_{J-NOW}$ used in S24 of the present routine, in S27 corresponding to the double clutch operation determination means 82.

When the determination in S8 is denied, the processings starting from S6 are repeatedly performed. However, when the determination in S8 is affirmed or when the determination in S3 is denied, the flag F is set to 0 to resume (carry out) calculation of the actual gear stage $G_{REAL}$ and the required gear stage $G_{REQUEST}$ in S11 and S12 of FIG 7, in S9 corresponding to the shift command stop means 70. Thus, the T1 timer and the T2 timer are reset.

Subsequently to S27 or when the determination in S24 is denied, it is determined in S28 corresponding to the electric power supply determination means 84 whether or not the ignition switch 80 has been operated to be turned off, namely, whether or not the supply of electric power to the vehicle (the electronic control unit 42) has been shut off.

When the determination in S28 is denied, the processings starting from S22 are repeatedly performed. When the determination in S28 is affirmed, the present routine is terminated.

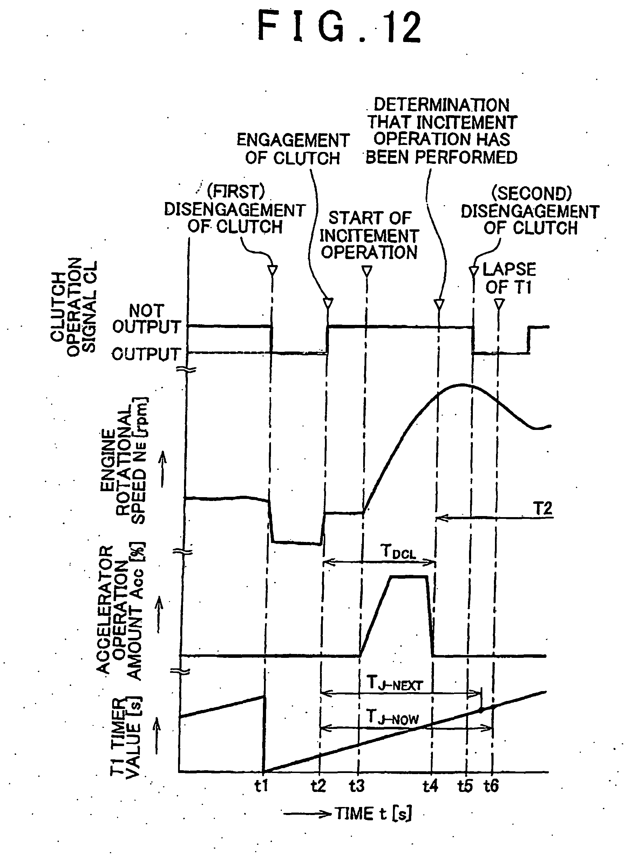

FIG. 12 is a time chart for explaining the control action of the electronic control unit 42 shown in the flowchart of FIG. 11 citing an example in which the double clutch operation is performed in making a shift in the manual transmission 18. This time chart exemplifies in a time-series manner the clutch operation signal CL, the engine rotational speed $N_E$, the accelerator operation amount $A_{CC}$, and the T1 timer value.

In FIG. 12, an axis of abscissa represents a time t [s], and a time point t1 indicates a time point at which the operation of depressing the clutch pedal 14 is performed to disengage the clutch 16. At this time point t1, the clutch operation signal CL is output from the clutch switch 54, and the engine rotational speed $N_E$ is reduced to a speed in the vicinity of an engine rotational speed $N_{E-IDLE}$ during idling. From the time point t1 to the time point t2, the shift lever (not shown) is operated to the neutral position for shutting off the power transmission path extending from the engine 12 to the driving wheels 24 in the manual transmission 18.

The time point t2 indicates a time point at which the operation of returning the clutch pedal 14 is performed to engage the clutch 16. At this time point t2, the clutch switch 54 is stopped from outputting the clutch operation signal CL, and the engine rotational speed $N_E$ is raised to a predetermined rotational speed. Further, at this time point t2, the determinations in S1 of FIG. 6A and S22 of FIG. 11 are affirmed, and the processings in S2 to S4 of FIG. 6A and S23 to S25 of FIG. 11 are swiftly performed immediately thereafter. A time point t6 in FIG 12 indicates a time point at which the predetermined time $T_{J-NOW}$ has elapsed from the time point t2. From the time point t2 to a time point immediately before the time point t6, the determinations in S3 of FIG. 6A and S24 of FIG. 11 are affirmed.

A time point t3 indicates a time point at which the operation of abruptly opening the accelerator pedal 48 is started, and a time point t4 indicates a time point at which the operation of abruptly closing the accelerator pedal 48 is terminated. That is, from the time point t3 to the time point t4, the so-called incitement operation of abruptly opening and then abruptly closing the accelerator pedal 48 is performed. In accordance with this incitement operation, the engine rotational speed $N_E$ is appropriately raised. In this embodiment of the invention, the determinations in S4 of FIG. 6A and S25 of FIG 11 are affirmed at the time point t4, and the processings in S5 to S7 of FIGS. 6A, 6B and S26 of FIG. 11 are swiftly performed.

The time point t5 indicates a time point at which the second operation of the clutch pedal 14 is started. After this time point t5, the shift lever is operated to an operation position corresponding to a desired shift stage with the clutch pedal 14 depressed, and the clutch pedal 14 is returned again. The clutch 16 is thereby engaged to complete the shift (double clutch operation).

In this embodiment of the invention, for example, the criterial time $T_{J-NEXT}$, which is used in making a shift after a period exemplified in FIG. 12, is corrected on the basis of the criterial time $T_{J-NOW}$ used in the period. For example, as shown in FIG 12, the criterial time $T_{J-NEXT}$, which is shorter than the criterial time $TJ_{-NOW}$ by $\{(T_{J-NOW}-T_{DCL})*Y\}$ is set as the new criterial time $T_J$ and stored.

The electronic control unit 42 according to this embodiment of the invention is designed for the manual transmission-mounted vehicle equipped with the manual transmission 18 and the shift command device 43 that issues a command to perform a shift operation of the manual transmission 18, as is the case with the foregoing first embodiment of the invention. The control functions as described above using FIGS. 6A and 6B are applied to the electronic control unit 42. Therefore, an effect similar to that of the first embodiment of the invention is obtained.

Further, according to the electronic control unit 42 of this embodiment of the invention, the double clutch operation determination means 82 determines, on the basis of the performance of the incitement operation of the accelerator pedal 48 before the lapse of the preset criterial time $T_J$ after the operation of depressing and returning the clutch pedal 14, that the double clutch operation has been performed. When the time from the time point at which it is determined that a changeover from disengagement of the clutch 16 to engagement of the clutch 16 has been made to the time point at which it is determined that the incitement operation has been operated, namely, the detection time TDCL of the double clutch operation is shorter than the criterial time $T_J$, the learning correction is made to reduce the criterial time $T_J$, and hence the criterial time $T_J$ is prevented from being set unnecessarily long. Therefore, the time when the shift command device 43 is stopped from issuing a command to perform a shift operation can be reduced while restraining the shift command device 43 from issuing an erroneous command as a result of an incitement operation during a double clutch operation. In particular, the shift command device 43 can be restrained from being stopped from issuing a shift operation command in response to the determination that a double clutch operation has been performed, due to an incitement operation during a normal operation.

Further, the electronic control unit 42 according to this embodiment of the invention is equipped with the criterial time initialization means 86 for returning the criterial time $T_J$ to the preset initial value when the ignition switch 80 as the main switch of the vehicle is operated to be turned on. Thus, the criterial time $T_J$ is set again in accordance with a character of the driver, a running condition, an environment, or the like, and is hence prevented from being set unnecessarily long. Therefore, the time in which the shift command device 43 is stopped from issuing a shift operation command can be reduced while restraining the shift command device 43 from issuing an erroneous command as a result of an incitement operation during a double clutch operation.

Further, according to the electronic control device 42 of this embodiment of the invention, the criterial time $T_J$ is set for each shift stage established before making a shift in the manual transmission 18. Thus, the critical time $T_J$ is set in accordance with the shift stage, and hence is prevented from being set unnecessarily long. Therefore, the time in which the shift command device 43 is stopped from issuing a shift operation command can be reduced while restraining the shift command device 43 from issuing an erroneous command as a result of an incitement operation during a double clutch operation.

In FIG 9, double clutch operation determination means 90 in the third embodiment of the invention is identical to the double clutch operation determination means 82 in the foregoing second embodiment of the invention except an action regarding a learning correction of the criterial time $T_J$, which will be described below. That is, the double clutch operation determination means 90 determines, on the basis of the performance of the incitement operation of the accelerator pedal 48 before the lapse of the preset criterial time $T_J$ after the operation of depressing and returning the clutch pedal 14, that the double clutch operation has been performed, and makes a learning correction such that the criterial time $T_J$ decreases as the number of times of a determination that the double clutch operation has been performed within a predetermined time decreases. For example, in this embodiment of the invention, when it is not determined within the criterial time $T_J$ (predetermined time) that the double clutch operation has been performed, the learning correction is made to reduce the criterial time $T_J$. Further, when it is determined within the criterial time $T_J$ (predetermined time) that the double clutch operation has been performed, the learning correction is made to increase the criterial time $T_J$. More specifically, when it is determined that the incitement operation has been performed before the lapse of the criterial time $T_{J\text{-NOW}}$ after the operation of depressing and returning the clutch pedal 14, the subsequently used criterial time $T_{J\text{-NEXT}}$ is calculated from a relationship expressed by a formula (2) shown below on the basis of the currently used criterial time $T_{J\text{-NOW}}$, and is set and stored as the new criterial time $T_J$. It should be noted herein that an increase amount $\Delta T_U$ in the formula (2) is a value preset and stored. Further, when it is not determined that the incitement operation has been performed before the lapse of the criterial time $T_{J\text{-NOW}}$ after the operation of depressing and returning the clutch pedal 14, the subsequently used criterial time $T_{J\text{-NEXT}}$ is calculated from a relationship expressed by a formula (3) shown below on the basis of the currently used criterial time $T_{J\text{-NOW}}$, and is set and stored as the new criterial time $T_J$. It should be noted herein that a decrease amount $\Delta T_D$ in the formula (3) is a value preset and stored. Accordingly, the double clutch operation determination means 90 functions also as learning correction means for making a learning correction of the criterial time $T_J$.

$$T_{J\text{-NEXT}} = T_{J\text{-NOW}} + \Delta T_U \ ... \ (2)$$

$$T_{J\text{-NEXT}} = T_{J\text{-NOW}} - \Delta T_D \ ... \ (3)$$

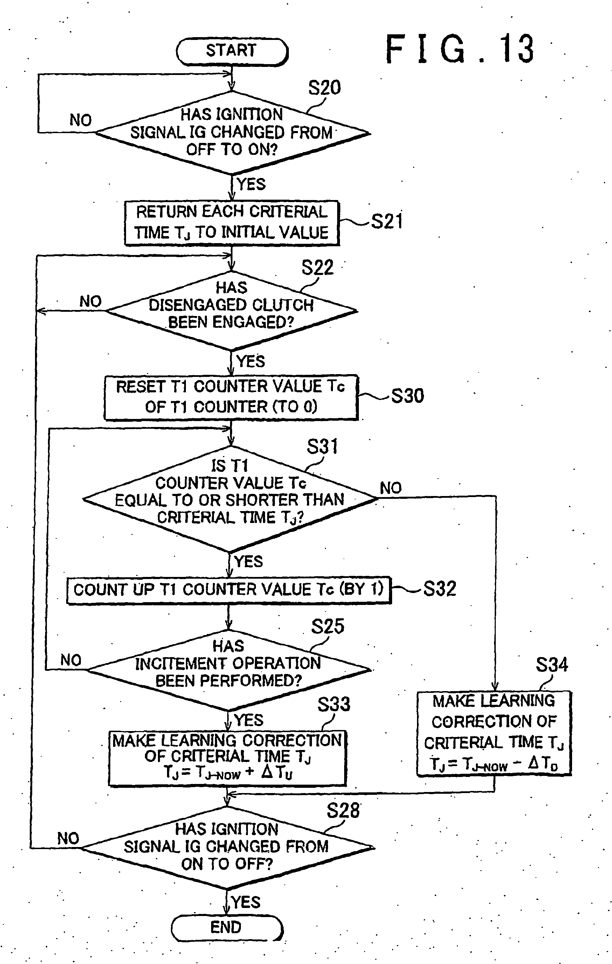

FIGS. 6A, 6B, 7, and 13 are flowcharts for explaining an essential part of a control action performed through a signal processing of the electronic control unit 42. The flowcharts of FIGS. 6A, 6B, and 7 each show a shift operation command control routine, namely, a series of procedures for issuing a command to perform a shift operation of the shift lever to make the actual gear stage $G_{REAL}$ coincident with the required gear stage $G_{REQUEST}$. Further, FIG 13 is a learning control routine for making a learning correction of the criterial time $T_J$ used in the shift operation command control routine. The respective routines are repeatedly executed in parallel at predetermined intervals of, for example, several milliseconds to dozens of milliseconds. This embodiment of the invention is identical to the foregoing first embodiment of the invention except in that the criterial time $T_J$ is used instead of the first waiting time $T_1$ in FIGS. 6A, 6B, and 7. Further, in FIG. 13, elements identical to those of FIG. 11 are denoted by the same reference symbols and will not be described any further.

In FIG 13, in S30 corresponding to the double clutch operation determination means 90, a T1 counter value Tc of the T1 counter installed in the electronic control unit 42 is reset (set to zero).

Further, when the determination in S22 is affirmed, it is determined in S31 corresponding to the shift command stop means 70 whether or not a time conversion value of the t1 counter value Tc of the T1 counter T1 is equal to or shorter than the criterial time $T_J$.

Further, when the determination in S31 is affirmed, the T1 counter value Tc of the T1 counter is incremented (+1) in 32 corresponding to the shift command stop means 70.

Further, when the determination in S25 is affirmed, the subsequently used criterial time $T_J$ ($T_{J\text{-NEXT}}$) is calculated from the relationship expressed by the formula (2) on the basis of the currently used criterial time $T_{J\text{-NOW}}$ in S33 corresponding to the double clutch operation determination means 90.

Further, when the determination in S31 is denied, the subsequently used criterial time $T_J$ ($T_{J\text{-NEXT}}$) is calculated from the relationship expressed by the formula (3) on the basis of the currently used criterial time $T_{J\text{-NOW}}$ in S34 corresponding to the double clutch operation determination means 90.

The electronic control unit 42 according to this embodiment of the invention is designed for the manual transmission-equipped vehicle equipped with the manual transmission 18 and the shift command device 43 that issues a command to perform a shift operation in the manual transmission 18, as is the case with the foregoing first embodiment of the invention. The control functions as described using FIGS. 6A and 6B are applied to the electronic control unit 42. Therefore, an effect similar to that of the first embodiment of the invention is obtained.

Further, according to the electronic control unit 42 of this embodiment of the invention, the double clutch operation determination means 90 determines, on the basis of the performance of the incitement operation of the accelerator pedal 48 before the lapse of the preset criterial time $T_J$ after the operation of depressing and returning the clutch pedal 14, that the double clutch operation has been performed. When it is not determined before the lapse of the criterial time $T_J$ (predetermined time) that the double clutch operation has been performed, a learning correction is made to reduce the criterial time $T_J$. Further, when it is determined before the lapse of the criterial time $T_J$ (predetermined time) that the double clutch operation has been performed, a learning correction is made to increase the criterial time $T_J$. Therefore, the criterial time is prevented from being set unnecessarily long. Therefore, the time when the shift command device 43 is stopped from issuing a command to perform a shift operation can be reduced while restraining the shift command device 43 from issuing an erroneous command as a result of an incitement operation during a double clutch operation.

Although the embodiments of the invention have been described above in detail with reference to the drawings, the invention should not be limited to these embodiments thereof, but can also be implemented in other modes.

For example, in each of the embodiments of the invention, the shift command stop means 70 suspends calculation of the actual gear stage $G_{REAL}$ by the actual gear stage calculation means 62 and calculation of the required gear stage $G_{REQUEST}$ by the required gear stage calculation means 60 until the second waiting time T2 elapses or the predetermined accelerator operation is performed after the double clutch operation determination means 68 determines that the double clutch operation has been performed. However, the invention is not limited to this mode. In short, the shift command stop means 70 may temporarily stop the upshift indicator lamp 38 and the downshift indicator lamp 40 from being lit when the double clutch operation determination means 68 determines that the double clutch operation has been performed.

For example, the shift command stop means 70 may suspend calculation of at least one of the actual gear stage $G_{REAL}$ and the required gear stage $G_{REQUEST}$ until the second waiting time (predetermined time) T2 [s] elapses or the predetermined accelerator operation is performed after the double clutch operation determination means 68 determines that the double clutch operation has been performed. Further, the shift command stop means 70 may stop the supply of the upshift command signal $S_{UP-L}$ and the downshift command signal $S_{DOWN-L}$ from the electronic control unit 42 until the second waiting time (predetermined time) T2 [s] elapses after the double clutch operation determination means 68 determines that the double clutch operation has been performed.

Further, in each of the foregoing embodiments of the invention, the shift commander 26 is provided on the indicator 28, but is not absolutely required to be provided thereon. For example, the shift commander 26 may be provided independently of the indicator 28. Further, the shift commander 26 is equipped with the upshift indicator lamp 38 and the downshift indicator lamp 40, which assume the shape of a triangle with an angle directed upward and downward respectively with respect to the driver and are constructed of the light emitting diodes. However, the invention is not limited to this mode. That is, any mode is possible as long as the driver can determine that an upshift command or a downshift command has been issued. For example, the upshift indicator lamp 38 or the downshift indicator lamp 40 may assume the shape of an arrow directed upward and downward with respect to the driver respectively, or indicate the actual gear stage $G_{REAL}$ and the required gear stage $G_{REQUEST}$. Further, the shift commander 26 may be equipped with a shift command screen constructed of a liquid crystal display (LCD) instead of the upshift indicator lamp 38 and the downshift indicator lamp 40, and figures or letters corresponding to the upshift command and the downshift command respectively may be displayed on the shift command screen.

Further, in one of the foregoing embodiments of the invention, the double clutch operation determination means 90 makes the learning correction to reduce the criterial time $T_J$ when it is not determined before the lapse of the criterial time $T_J$ (predetermined time) that the double clutch operation has been performed, and makes the learning correction to increase the criterial time $T_J$ when it is determined before the lapse of the criterial time $T_J$ (predetermined time) that the double clutch operation has been performed. However, the invention is not limited to this mode. In short, any mode is possible as long as the learning correction is made such that the criterial time $T_J$ decreases as the number of times of the determination that the double clutch operation has been performed within the preset predetermined time decreases.

Further, in one of the foregoing embodiments of the invention, the double clutch operation determination means 90 calculates the subsequently used criterial time $T_{J-NEXT}$ from the relationship expressed by the formula (2) on the basis of the currently used criterial time $T_{J-NOW}$ and sets the subsequently used criterial time $T_{J-NEXT}$ as the new criterial time $T_J$ when it is determined before the lapse of the criterial time $T_{J-NOW}$ after the operation of depressing and returning the clutch pedal 14 that the incitement operation has been performed, and calculates the subsequently used criterial time $T_{J-NEXT}$ from the relationship expressed by the formula (3) on the basis of the currently used criterial time $T_{J-NOW}$ and sets the subsequently used criterial time $T_{J-NEXT}$ as the new criterial time $T_J$ when it is not determined before the lapse of the criterial time $T_{J-NOW}$ after the operation of depressing and returning the clutch pedal 14 that the incitement operation has been performed. In addition to this mode, however, it is also appropriate to prevent the criterial time $T_J$

from increasing infinitely or becoming equal to or smaller than zero. For example, in setting the calculated criterial time $T_{J-NEXT}$ as the new criterial time $T_J$, it is appropriate to provide at least one of an upper limit and a lower limit for the newly set criterial time $T_J$.

Further, in each of the foregoing embodiments of the invention, the criterial time initialization means 86 returns the criterial time $T_J$ used in the double clutch operation determination means 82 to the preset initial value when the electric power supply determination means 84 determines that the ignition switch 80 has been operated to be turned on and hence electric power has been supplied to the vehicle. However, the critical time initialization means 86 may return the criterial time $T_J$ used in the double clutch operation determination means 82 to the preset initial value when the electric power supply determination means 84 determines that the ignition switch 80 has been operated to be turned off.

Further, in one of the foregoing embodiments of the invention, the double clutch operation determination means 90 makes the learning correction of the criterial time $T_J$ in S27 after the determination in S26 of FIG. 11 is affirmed. However, the invention is not limited to this mode. The double clutch operation determination means 90 may make the learning correction of the criterial time $T_J$, for example, when the determination in S25 of FIG. 11 is affirmed or when a changeover to engagement of the clutch 16 is made after the determination in S25 is affirmed.

What has been described above is nothing but the embodiments of the invention. Although other possible embodiments of the invention are not exemplified one by one, the invention can be implemented after being modified and improved in various manners on the basis of the knowledge of those skilled in the art without departing from the scope of the invention, which is defined by the appended claims.

**Claims**

1. A control apparatus for a manual transmission-mounted vehicle equipped with a manual transmission (18) whose shift stage is changed over through a shift operation by a shift lever during an operation of a clutch pedal (14), and a shift command device (43) that commands a driver to perform the shift operation of the shift lever, comprising:

   double clutch operation determination means (68, 84) for making a determination on a double clutch operation by the driver wherein a double clutch operation is defined as the process of depressing the clutch pedal to operate a shift lever to neutral, releasing the clutch pedal to reengage the clutch, increasing the engine rotational speed by inciting the accelerator, depressing the clutch pedal again and operating the shift lever to a shift position corresponding to the desired shift stage, releasing the clutch pedal again to engage the clutch and to complete a shift; and

   **characterised in that** the control apparatus further comprises: shift command stop means (70) for temporarily stopping the shift command device from outputting a command when the double clutch operation determination means (68, 84) determines that the double clutch operation has been performed.

2. The control apparatus for the manual transmission-mounted vehicle according to claim 1, wherein the shift command device calculates an actual gear stage on a basis of a rotational speed of an input shaft of the manual transmission and a rotational speed of an output shaft of the manual transmission, calculates a required gear stage on a basis of a vehicle speed and an accelerator operation amount, and indicates a command to perform a shift operation for making the actual gear stage coincident with the required gear stage.

3. The control apparatus for the manual transmission-mounted vehicle according to claim 1 or 2, wherein the double clutch operation determination means determines, on a basis of performance of an incitement operation of an accelerator pedal immediately after an operation of depressing and returning the clutch pedal, that the double clutch operation has been performed.

4. The control apparatus for the manual transmission-mounted vehicle according to claim 1 or 2, wherein the double clutch operation determination means determines, on a basis of performance of an incitement operation of an accelerator pedal before a lapse of a preset criterial time after an operation of depressing and returning the clutch pedal, that the double clutch operation has been performed, and makes a learning correction to reduce the criterial time when a time from a time point at which the clutch pedal has been depressed and returned to a time point at which it is determined that the double clutch operation has been performed is shorter than the criterial time.

5. The control apparatus for the manual transmission-mounted vehicle according to claim 1 or 2, wherein the double clutch operation determination means determines, on a basis of performance of an incitement operation of an accelerator pedal before a lapse of a preset criterial time after an operation of depressing and returning the clutch pedal, that the double clutch operation has been performed, and make a learning correction such that the criterial time decreases as a number of times of a determination that the double clutch operation has been performed within a predetermined time decreases.

6. The control apparatus for the manual transmission-mounted vehicle according to claim 4 or 5, further comprising criterial time initialization means for returning the criterial time to a preset initial value when a main switch of the vehicle is operated to be turned on or off.

7. The control apparatus for the manual transmission-mounted vehicle according to any one of claims 4 to 6, wherein the criterial time is set for each shift stage of the manual transmission.

8. The control apparatus for the manual transmission-mounted vehicle according to any one of claims 2 to 7, wherein the shift command stop means suspends calculation of the actual gear stage by the shift command device for a predetermined time after the double clutch operation determination means determines that the double clutch operation has been performed.

9. The control apparatus for the manual transmission-mounted vehicle according to any one of claims 2 to 7, wherein the shift command stop means suspends calculation of the actual gear stage by the shift command device until a predetermined accelerator operation is performed after the double clutch operation determination means determines that the double clutch operation has been performed.

10. A control method for a manual transmission-mounted vehicle equipped with a manual transmission (18) whose shift stage is changed over through a shift operation by a shift lever during an operation of a clutch pedal (14), and a shift command device (43) that commands a driver to perform the shift operation of the shift lever, comprising:

   making a determination on a double clutch operation by the driver wherein a double clutch operation is defined as the process of depressing the clutch pedal to operate a shift lever to neutral, releasing the clutch pedal to reengage the clutch, increasing the engine rotational speed by inciting the accelerator, depressing the clutch pedal again and operating the shift lever to a shift position corresponding to the desired shift stage, releasing the clutch pedal again to engage the clutch and to complete a shift; and

   **characterised by** further comprising: temporarily stopping the shift command device from outputting a command when it is determined that the double clutch operation has been performed.


**Patentansprüche**

1. Steuervorrichtung für ein Fahrzeug mit manuellem Getriebe, das mit einem manuellen Getriebe (18), dessen Schaltstufe über eine Schaltoperation mittels eines Schalthebel während einer Betätigung eines Kupplungspedals (14) gewechselt wird, und mit einer Schaltanweisungsvorrichtung (43) ausgestattet ist, die einem Fahrer die Anweisung gibt, die Schaltoperation des Schalthebels durchzuführen, aufweisend:

   ein Zweifach-Kupplungsbetätigungs-Bestimmungsmittel (68, 84) aufweisend zum Bestimmen einer zweifachen Kupplungsbetätigung durch den Fahrer, wobei eine zweifache Kupplungsbetätigung als Vorgang definiert ist, bei dem das Kupplungspedal niedergedrückt wird, um einen Schalthebel in die Neutralstellung zu bringen, das Kupplungspedal losgelassen wird, um die Kupplung wieder einzurücken,
   die Drehzahl des Verbrennungsmotors durch Antippen des Beschleunigungselements erhöht wird, das Kupplungspedal erneut niedergedrückt wird und der Schalthebel in eine Schaltstellung gebracht wird, die einer gewünschten Schaltstufe entspricht, das Kupplungspedal erneut losgelassen wird, um die Kupplung einzurücken und um einen Schaltvorgang abzuschließen; und

   **dadurch gekennzeichnet, dass** die Steuervorrichtung ferner aufweist: ein Schaltanweisungs-Unterbrechungsmittel (70) zum vorübergehenden Unterbrechen der Ausgabe einer Anweisung von der Schaltanweisungsvorrichtung, wenn das Zweifach-Kupplungsbetätigungs-Bestimmungsmittel (68, 84) bestimmt, dass die zweifache Kupplungsbetätigung durchgeführt worden ist.

2. Steuervorrichtung für das mit einem manuellen Getriebe ausgestattete Fahrzeug nach Anspruch 1, wobei die Schaltanweisungsvorrichtung eine aktuelle Schaltstufe auf Basis einer Drehzahl einer Eingangswelle des manuellen Getriebes und einer Drehzahl einer Ausgangswelle des manuellen Getriebes berechnet, eine benötigte Gangstufe auf Basis einer Fahrzeuggeschwindigkeit und eines Gaspedal-Verstellwegs berechnet und eine Anweisung zur Durchführung einer Schaltoperation anzeigt, um die aktuelle Gangstufe auf die benötigte Gangstufe zu bringen.

3. Steuervorrichtung für das mit einem manuellen Getriebe ausgestattete Fahrzeug nach Anspruch 1 oder 2, wobei das Zweifach-Kupplungsbetätigungs-Bestimmungsmittel auf Basis der Durchführung einer Antippbetätigung eines Gaspedals unmittelbar nach Durchführung des Niederdrückens und Zurückstellens des Kupplungspedals bestimmt, dass die Doppelkupplungsbetätigungsoperation durchgeführt wurde.

4. Steuervorrichtung für das mit einem manuellen Getriebe ausgestattete Fahrzeug nach Anspruch 1 oder 2, wobei das Zweifach-Kupplungsbetätigungs-Bestimmungsmittel auf Basis einer Durchführung einer Antippbetätigung eines Gaspedals vor Ablauf einer zuvor festgelegten kritischen Zeit nach Durchführung eines Niederdrückens und Zurückstellens des Kupplungspedals bestimmt, dass die Zweifach-Kupplungsbetätigung durchgeführt wurde, und eine Lernkorrektur durchführt, um die kritische Zeit zu verkürzen, wenn eine Zeit ab einem Zeitpunkt, zu dem das Kupplungspedal niedergedrückt und zurückgestellt wurde, bis zu einem Zeitpunkt, zu dem bestimmt wird, dass die Zweifach-Kupplungsbetätigung durchgeführt wurde, kürzer ist als die kritische Zeit.

5. Steuervorrichtung für das mit einem manuellen Getriebe ausgestattete Fahrzeug nach Anspruch 1 oder 2, wobei das Zweifach-Kupplungsbetätigungs-Bestimmungsmittel auf Basis der Durchführung einer Antippbetätigung eines Gaspedals vor Ablauf einer vorab eingestellten kritischen Zeit nach Durchführung eines Niederdrückens und Zurückstellens des Gaspedals bestimmt, dass die zweifache Kupplungsbetätigung durchgeführt wurde, und eine Lernkorrektur durchführt, so dass die kritische Zeit kürzer wird, je seltener eine Bestimmung durchgeführt wird, dass die zweifache Kupplungsbetätigung in einer vorgegebenen Zeit durchgeführt wurde.

6. Steuervorrichtung für das mit einem manuellen Getriebe ausgestattete Fahrzeug nach Anspruch 4 oder 5, ferner ein Zeitkriterium-Initialisierungsmittel aufweisend zum Zurückbringen der kritischen Zeit auf einen voreingestellten Anfangswert, wenn ein Hauptschalter des Fahrzeugs betätigt wird, um ein Ein- oder Ausschalten durchzuführen.

7. Steuervorrichtung für das mit einem manuellen Getriebe ausgestattete Fahrzeug nach einem der Ansprüche 4 bis 6, wobei die kritische Zeit für jede Schaltstufe des manuellen Getriebes eingestellt wird.

8. Steuervorrichtung für das mit einem manuellen Getriebe ausgestattete Fahrzeug nach einem der Ansprüche 2 bis 7, wobei das Schaltanweisungs-Unterbrechungsmittel die Berechnung der aktuellen Schaltstufe durch die Schaltanweisungsvorrichtung für eine vorgegebene Zeit nach der Bestimmung einer zweifachen Kupplungsbetätigung durch das Zweifach-Kupplungsbetätigungs-Bestimmungsmittel aussetzt.

9. Steuervorrichtung für das mit einem manuellen Getriebe ausgestattete Fahrzeug nach einem der Ansprüche 2 bis 7, wobei das Schaltanweisungs-Unterbrechungsmittel die Berechnung der aktuellen Schaltstufe durch die Schaltbefehlsvorrichtung aussetzt, bis eine vorgegebene Gaspedalbetätigung durchgeführt wird, nachdem das Zweifach-Kupplungsbetätigungs-Bestimmungsmittel bestimmt, dass die zweifache Kupplungsbetätigung durchgeführt wurde.

10. Steuervorrichtung für das mit einem manuellen Getriebe ausgestattete Fahrzeug, das mit einem manuellen Getriebe (18), dessen Schaltstufe über eine Schaltoperation mittels eines Schalthebel während einer Betätigung eines Kupplungspedals (14) gewechselt wird, und mit einer Schaltanweisungsvorrichtung (43) ausgestattet ist, die einem Fahrer die Anweisung gibt, die Schaltoperation des Schalthebels durchzuführen, aufweisend:

   Durchführen einer Bestimmung über eine Doppelkupplungsbetätigung durch den Fahrer, wobei eine Doppelkupplungsbetätigung definiert ist als Vorgang, bei dem das Kupplungspedal niedergedrückt wird, um einen Schalthebel in die Neutralstellung zu bringen, das Kupplungspedal losgelassen wird, um die Kupplung wieder einzurücken,
   die Drehzahl des Verbrennungsmotors durch Antippen des Beschleunigungselements erhöht wird, das Kupplungspedal erneut niedergedrückt wird und der Schalthebel in eine Schaltstellung gebracht wird, die einer gewünschten Schaltstufe entspricht, das Kupplungspedal erneut losgelassen wird, um die Kupplung einzurücken und um einen Schaltvorgang abzuschließen; und

   **dadurch gekennzeichnet, dass** es ferner aufweist: vorübergehendes Unterbrechen der Ausgabe einer Anweisung durch das Schaltanweisungs-Unterbrechungsmittel (70), wenn das Doppel-Kupplungsbetätigungs-Bestimmungsmittel (68, 84) bestimmt, dass die doppelte Kupplungsbetätigung durchgeführt worden ist.

**Revendications**

1. Appareil de commande pour un véhicule à transmission manuelle équipé d'une transmission manuelle (18) dont l'étage de changement de vitesse est modifié suite à une opération de changement de vitesse réalisée par un levier de changement de vitesse pendant une opération d'une pédale d'embrayage (14), et d'un dispositif de commande de changement de vitesse (43) que commande un conducteur pour réaliser l'opération de changement de vitesse du levier de vitesse, comprenant :

   des moyens de détermination d'opération de double embrayage (68, 84) pour réaliser une détermination d'une opération de double embrayage par le conducteur, dans lequel une opération de double embrayage est définie comme étant le processus pour enfoncer la pédale d'embrayage afin de faire passer un levier de changement de vitesse au point mort, relâcher la pédale d'embrayage pour remettre en prise l'embrayage, augmenter la vitesse de rotation du moteur en actionnant l'accélérateur, enfoncer à nouveau la pédale d'embrayage et actionner le levier de changement de vitesse dans une position de changement de vitesse correspondant à l'étage de changement de vitesse souhaité, relâcher à nouveau la pédale d'embrayage pour mettre en prise l'embrayage et terminer un changement de vitesse ; et

   **caractérisé en ce que** l'appareil de commande comprend en outre : des moyens d'arrêt de commande de changement de vitesse (70) pour arrêter temporairement le dispositif de commande de changement de vitesse de produire une commande lorsque les moyens de détermination d'opération de double embrayage (68, 84) déterminent que l'opération de double embrayage a été réalisée.

2. Appareil de commande pour un véhicule à transmission manuelle selon la revendication 1, dans lequel le dispositif de commande de changement de vitesse calcule une vitesse réelle en fonction d'une vitesse de rotation d'un arbre d'entrée de la transmission manuelle et une vitesse de rotation d'un arbre de sortie de la transmission manuelle, calcule une vitesse requise en fonction d'une vitesse du véhicule et une quantité de fonctionnement de l'accélérateur, et indique une commande pour réaliser une opération de changement de vitesse afin de faire coïncider la vitesse réelle avec la vitesse souhaitée.

3. Appareil de commande pour un véhicule à transmission manuelle selon la revendication 1 ou 2, dans lequel les moyens de détermination d'opération de double embrayage déterminent, en fonction de la réalisation d'une opération d'incitement d'une pédale d'accélérateur immédiatement après une opération consistant à enfoncer et à relâcher la pédale d'embrayage, que l'opération de double embrayage a été réalisée.

4. Appareil de commande pour un véhicule à transmission manuelle selon la revendication 1 ou 2, dans lequel les moyens de détermination d'opération de double embrayage déterminent, en fonction de la réalisation d'une opération d'incitement d'une pédale d'accélérateur avant un laps de temps critique prédéterminé, après une opération consistant à enfoncer et à relâcher la pédale d'embrayage, que l'opération de double embrayage a été réalisée, 1 et réalisent une correction d'apprentissage pour réduire le temps critique lorsqu'un temps à partir du moment où la pédale d'embrayage a été enfoncée et relâchée jusqu'à un moment où on a déterminé que l'opération de double embrayage a été réalisée, est plus court que le temps critique.

5. Appareil de commande pour un véhicule à transmission manuelle selon la revendication 1 ou 2, dans lequel les moyens de détermination d'opération de double embrayage, déterminent, en fonction de la réalisation d'une opération d'incitement d'une pédale d'accélérateur avant un laps de temps critique prédéterminé après une opération consistant à enfoncer et à relâcher la pédale d'embrayage, que l'opération de double embrayage a été réalisée, et réduisent une correction d'apprentissage de sorte que le temps critique diminue en fonction du nombre de fois que l'on détermine que l'opération de double embrayage a été réalisée dans une période de temps prédéterminée.

6. Appareil de commande pour un véhicule à transmission manuelle selon la revendication 4 ou 5, comprenant en outre des moyens d'initialisation de temps critique pour ramener le temps critique à une valeur initiale prédéterminée lorsqu'un commutateur principal du véhicule est actionné pour être mis en marche ou arrêté.

7. Appareil de commande pour un véhicule à transmission manuelle selon l'une quelconque des revendications 4 à 6, dans lequel le temps critique est déterminé pour chaque changement de vitesse de la transmission manuelle.

8. Appareil de commande pour un véhicule à transmission manuelle selon l'une quelconque des revendications 2 à 7, dans lequel les moyens d'arrêt de commande de changement de vitesse suspendent le calcul de la vitesse réelle par le dispositif de commande de changement de vitesse pendant une période de temps prédéterminée après que les moyens de détermination d'opération de double embrayage ont déterminé que l'opération de double embrayage a été réalisée.

9. Appareil de commande pour un véhicule à transmission manuelle selon l'une quelconque des revendications 2 à 7, dans lequel les moyens d'arrêt de commande de changement de vitesse suspendent le calcul de la vitesse réelle par le dispositif de commande de changement de vitesse jusqu'à ce qu'une opération d'accélérateur prédéterminée a été réalisée après que les moyens de détermination d'opération de double embrayage ont déterminé que l'opération de double embrayage a été réalisée.

10. Procédé de commande pour un véhicule à transmission manuelle équipé d'une transmission manuelle (18) dont le changement de vitesse est modifié suite à une opération de changement de vitesse réalisée par un levier de vitesse pendant une opération d'une pédale d'embrayage (14), et un dispositif de commande de changement de vitesse (43) que commande un conducteur afin de réaliser l'opération de changement de vitesse du levier de vitesse, comprenant les étapes consistant à :

réaliser une détermination d'une opération de double embrayage par le conducteur dans lequel une opération de double embrayage est définie comme étant le processus consistant à enfoncer la pédale d'embrayage pour faire passer un levier de vitesse au point mort, relâcher la pédale d'embrayage pour remettre en prise l'embrayage, augmenter la vitesse de rotation du moteur en incitant l'accélérateur, enfoncer à nouveau la pédale d'embrayage et actionner le levier de changement de vitesse dans une position de changement de vitesse correspondant au changement de vitesse souhaité, relâcher à nouveau la pédale d'embrayage pour mettre en prise l'embrayage et terminer un changement de vitesse ; et

**caractérisé en ce qu'**il comprend l'étape consistant à arrêter temporairement le dispositif de commande de changement de vitesse par rapport à l'introduction d'une commande lorsque l'on détermine que l'opération de double embrayage a été réalisée.

# FIG.1

# FIG.2

EP 2 133 603 B1

# FIG. 3

UPSHIFT INDICATOR LAMP 38

SHIFT COMMAND DEVICE 43

DOWNSHIFT INDICATOR LAMP 40

26

$S_{UP-L}$

$S_{DOWN-L}$

64

45 — VEHICLE SPEED SENSOR

VEHICLE SPEED V

Acc

60 — REQUIRED GEAR STAGE CALCULATION MEANS

SHIFT COMMAND DETERMINATION MEANS

VEHICLE SPEED V

46 — ENGINE ROTATIONAL SPEED SENSOR

$N_E$

ACTUAL GEAR STAGE CALCULATION MEANS — 62

REQUIRED GEAR STAGE $G_{REQUEST}$

ACTUAL GEAR STAGE $G_{REAL}$

70 — SHIFT COMMAND STOP MEANS

44 SHIFT COMMAND CONTROL PORTION

50 — ACCELERATOR OPERATION AMOUNT SENSOR

Acc

DOUBLE CLUTCH OPERATION DETERMINATION MEANS — 68

54 — CLUTCH SWITCH

CL

CLUTCH OPERATION DETERMINATION MEANS — 66

42 ELECTRONIC CONTROL UNIT

22

## F I G . 4

## F I G . 5

# FIG.6A

```
              ┌──────────┐
              │  START   │
              └────┬─────┘
                   │
                   ▼              S1
          ╱─────────────────╲
    NO   ╱       HAS          ╲
◄───────┤  DISENGAGED CLUTCH   │
         ╲    BEEN ENGAGED?    ╱
          ╲─────────┬─────────╱
                    │ YES
                    ▼
      ┌──────────────────────────────┐
      │ START COUNTING OF T1 TIMER    │──S2
      └──────────────┬───────────────┘
                     │
                     ▼               S3
           ╱──────────────────────╲
          ╱       IS T1             ╲
         ╱ TIMER VALUE EQUAL TO      ╲   NO
         │ OR SHORTER THAN FIRST     │──────►
          ╲  WAITING TIME T1?       ╱
           ╲──────────┬───────────╱
                      │ YES
                      ▼           S4
           ╱─────────────────────╲
     NO   ╱        HAS             ╲
◄────────┤  INCITEMENT OPERATION    │
          ╲   BEEN OPERATED?       ╱
           ╲─────────┬───────────╱
                     │ YES
                     ▼
      ┌──────────────────────────────┐
      │ START COUNTING OF T2 TIMER    │──S5
      └──────────────┬───────────────┘
                     │
    ⎛2⎞             ⎛1⎞              ⎛3⎞
```

EP 2 133 603 B1

# FIG.6B

②              ①              ③

STOP DETERMINATION ON ACTUAL
GEAR STAGE, SET FLAG F TO 1 — S6

S7

NO    IS CLUTCH ENGAGED?

YES

S8

HAS OPERATION OF DEPRESSING
ACCELERATOR BEEN PERFORMED?
OR IS T2 TIMER VALUE EQUAL TO OR
LONGER THAN SECOND
WAITING TIME T2?

NO

YES

RESUME DETERMINATION ON ACTUAL GEAR
STAGE, SET FLAG F TO 0, AND RESET T1
TIMER COUNTER AND T2 TIMER COUNTER — S9

END

25

# F I G . 7

```
                    ┌─────────┐
                    │  START  │
                    └─────────┘
                         │
                         ▼            S10
                    ◇───────────◇
                    IS FLAG F          YES ──────────┐
                    SET TO 1?                         │
                    ◇───────────◇                     │
                         │ NO                         │
                         ▼                            │
              ┌────────────────────┐                 │
              │ MAKE DETERMINATION  │  S11           │
              │ ON ACTUAL GEAR STAGE│                │
              └────────────────────┘                 │
                         │                            │
                         ▼                            │
              ┌────────────────────┐                 │
              │ MAKE DETERMINATION ON│ S12           │
              │ REQUIRED GEAR STAGE │                 │
              └────────────────────┘                 │
                         │                            │
                         ▼                            │
                    RELATIONSHIP         S13          │
                    IN MAGNITUDE BETWEEN              │
            CASE1   $G_{REAL}$ AND $G_{REQUEST}$?  CASE3
                    CASE1: $G_{REAL} < G_{REQUEST}$   │
                    CASE2: $G_{REAL} > G_{REQUEST}$   │
                    CASE3: $G_{REAL} = G_{REQUEST}$   │
                                                   S16│
```

CASE1 — S14 — LIGHT UPSHIFT INDICATOR LAMP

CASE2 — S15 — LIGHT DOWNSHIFT INDICATOR LAMP

CASE3 / S16 — EXTINGUISH BOTH UPSHIFT INDICATOR LAMP AND DOWNSHIFT INDICATOR LAMP

END

# FIG.8

# FIG.9

SHIFT
COMMAND
DEVICE
43

38
26
40

$S_{UP-L}$
$S_{DOWN-L}$

64

45
VEHICLE SPEED
SENSOR

VEHICLE
SPEED V

60
REQUIRED
GEAR STAGE
CALCULATION
MEANS

SHIFT COMMAND
DETERMINATION
MEANS

Acc

VEHICLE SPEED V

46
ENGINE
ROTATIONAL
SPEED SENSOR

$N_E$

ACTUAL
GEAR STAGE
CALCULATION
MEANS

REQUIRED
GEAR
STAGE
$G_{REQUEST}$

ACTUAL
GEAR
STAGE
$G_{REAL}$

62

SHIFT COMMAND
STOP MEANS

70

44
SHIFT COMMAND
CONTROL
PORTION

50
ACCELERATOR
OPERATION
AMOUNT SENSOR

Acc

DOUBLE CLUTCH
OPERATION
DETERMINATION
MEANS

82(90)

54
CLUTCH SWITCH

CL

CLUTCH
OPERATION
DETERMINATION
MEANS

66

86
CRITERIAL TIME
INITIALIZATION
MEANS

80
IGNITION SWITCH

IG

ELECTRIC
POWER SUPPLY
DETERMINATION
MEANS

84

42
ELECTRONIC
CONTROL UNIT

# FIG.10

| ACTUAL GEAR STAGE BEFORE SHIFT | INDEFINITE | 1ST | 2ND | 3RD | 4TH | 5TH | 6TH |
|---|---|---|---|---|---|---|---|
| CRITERIAL TIME $T_J$ | $T_0$ | $T_{1ST}$ | $T_{2ND}$ | $T_{3RD}$ | $T_{4TH}$ | $T_{5TH}$ | $T_{6TH}$ |

# F I G . 11

```
        ( START )

         S20
   NO ◄── HAS IGNITION
          SIGNAL IG CHANGED FROM
          OFF TO ON?
              │ YES

          RETURN EACH CRITERIAL      S21
          TIME TJ TO INITIAL VALUE

          S22
   NO ◄── HAS
          DISENGAGED CLUTCH
          BEEN ENGAGED?
              │ YES

          START COUNTING OF T1 TIMER     S23

          S24
          IS T1 TIMER
          VALUE EQUAL TO OR       NO
          SHORTER THAN CRITERIAL
          TIME TJ?
              │ YES

          S25
   NO ◄── HAS
          INCITEMENT OPERATION
          BEEN PERFORMED?
              │ YES

          S26
   NO ◄── HAS
          CLUTCH BEEN
          DISENGAGED?
              │ YES

          MAKE LEARNING CORRECTION     S27
          OF CRITERIAL TIME TJ

          S28
   NO ◄── HAS IGNITION
          SIGNAL IG CHANGED FROM
          ON TO OFF?
              │ YES

          ( END )
```

# FIG.12

# F I G . 13

START

S20
HAS IGNITION
SIGNAL IG CHANGED FROM
OFF TO ON?

NO

YES

RETURN EACH CRITERIAL
TIME $T_J$ TO INITIAL VALUE — S21

S22
HAS
DISENGAGED CLUTCH
BEEN ENGAGED?

NO

YES

RESET T1 COUNTER VALUE $T_C$
OF T1 COUNTER (TO 0) — S30

S31
IS T1
COUNTER VALUE $T_C$
EQUAL TO OR SHORTER THAN
CRITERIAL TIME $T_J$?

NO

YES

COUNT UP T1 COUNTER VALUE $T_C$ (BY 1) — S32

S25
HAS
INCITEMENT OPERATION
BEEN PERFORMED?

NO

YES S33

MAKE LEARNING CORRECTION
OF CRITERIAL TIME $T_J$
$T_J = T_{J\text{-}NOW} + \Delta T_U$

S34
MAKE LEARNING
CORRECTION OF
CRITERIAL TIME $T_J$
$T_J = T_{J\text{-}NOW} - \Delta T_D$

S28
HAS IGNITION
SIGNAL IG CHANGED FROM
ON TO OFF?

NO

YES

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007225096 A
- US 4320381 A
- US 11368749 B
- US 20070207896 A1
- US 9723623 W
- WO 9827369 A